(19)

**Europäisches Patentamt**
**European Patent Office**
**Office européen des brevets**

(11) **EP 4 708 843 A1**

(12) # EUROPEAN PATENT APPLICATION

(43) Date of publication:
**11.03.2026 Bulletin 2026/11**

(21) Application number: **24198926.8**

(22) Date of filing: **06.09.2024**

(51) International Patent Classification (IPC):
**H04N 13/232** $^{(2018.01)}$

(52) Cooperative Patent Classification (CPC):
**H04N 13/232; G01J 3/2803; G01J 3/2823**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ludwig-Maximilians-Universität München, in Vertretung des Freistaates Bayern 80539 München (DE)**

(72) Inventors:
• **Döpp, Andreas**
  **85748 Garching b. München (DE)**
• **Schröder, Jakob**
  **85748 Garching b. München (DE)**

(74) Representative: **v. Bezold & Partner Patentanwälte - PartG mbB Ridlerstraße 57 80339 München (DE)**

(54) **OPTICAL IMAGING APPARATUS AND SPECTRAL IMAGING METHOD FOR CREATING SPECTRALLY AND SPATIALLY RESOLVED IMAGE DATA**

(57)    An optical imaging apparatus 100, being configured for receiving an input light field 1 and for creating spectrally and spatially resolved image data $S_\omega$ of the input light field 1, said input light field 1 having an input light field spectrum and two different polarization components 1A, 1B, comprises an autocorrelation device 10 being configured for receiving the input light field 1, controlling a delay between the polarization components 1A, 1B of the input light field 1 and providing an autocorrelation light field 2 including a superposition of the polarization components 1A, 1B, a photosensor device 20 having at least one polarizing element 21 and a photosensor 22 with a photosensor sensitivity spectrum and being configured for receiving the autocorrelation light field 2 and providing sensed spatially resolved light field sensor data $F_\tau$, wherein the light field sensor data $F_\tau$ include a superposition of the spectrally resolved image data $S_\omega$ to be obtained and the light field sensor data $F_\tau$ depend on said delay between the polarization components 1A, 1B of the input light field 1, and an image processor device 30 being coupled with the photosensor device 20 and being configured for calculating the spectrally resolved image data $S_\omega$ based on the light field sensor data $F_\tau$, wherein the image processor device 30 is configured for calculating the spectrally resolved image data $S_\omega$ by applying a regularized inversion to the light field sensor data $F_\tau$, said inversion being constructed in dependency on prior information on at least one of the input light field 1, the spectrally resolved image data $S_\omega$ and the optical imaging apparatus 100. Furthermore, a spectral imaging method is described.

FIG. 1

EP 4 708 843 A1

**Description**

Field of the invention

The invention relates to an optical imaging apparatus for receiving an input light field and for creating spectrally and spatially resolved image data of the input light field and to a spectral imaging method for creating spectrally and spatially resolved image data of an input light field. Applications of the invention are available e.g., in the fields of hyperspectral imaging and ultrashort laser pulse characterization.

Technical background

In the present specification, reference is made to the following prior art illustrating technical background of the invention and related techniques:

[1] Jeremy Allington-Smith. Basic principles of integral field spectroscopy. New Astronomy Reviews, 50(4-5):244-251, 2006;

[2] Gonzalo R. Arce, David J. Brady, Lawrence Carin, Henry Arguello, and David S. Kittle. Compressive coded aperture spectral imaging: An introduction. IEEE Signal Processing Magazine, 31(1):105-115, 2014;

[3] Andrew Bodkin, Andrew Sheinis, Amy Norton, Justin Daly, Scott Beaven, and James Wein-heimer. Snapshot hyperspectral imaging - the hyperpixel array camera. In Proceedings of SPIE, volume 7334, page 73340H. International Society for Optics and Photonics, 2009;

[4] Laura M Dale, André Thewis, Christelle Boudry, Ioan Rotar, Pierre Dardenne, Vincent Baeten, and Juan A Fernández Pierna. Hyperspectral imaging applications in agriculture and agro-food product quality and safety control: A review. Applied Spectroscopy Reviews, 48(2):142-159, 2013;

[5] Sumner P Davis, Mark C Abrams, and James W Brault. Fourier transform spectrometry. Else-vier, 2001;

[6] Xingchen Dong, Martin Jakobi, Shengjia Wang, Michael H Köhler, Xiaoxing Zhang, and Alexander W Koch. A review of hyperspectral imaging for nanoscale materials research. Applied Spectroscopy Reviews, 54(4):285-305, 2019;

[7] Yao-Ze Feng and Da-Wen Sun. Application of hyperspectral imaging in food safety inspection and control: a review. Critical reviews in food science and nutrition, 52(11):1039-1058, 2012;

[8] Silvano Galliani, Charis Lanaras, Dimitrios Marmanis, Emmanuel Baltsavias, and Konrad Schindler. Learned spectral super-resolution https://arxiv.org/abs/1703.09470;

[9] Liang Gao, Noah Bedard, Nathan Hagen, Robert T. Kester, and Tomasz S. Tkaczyk. Snapshot hyperspectral imaging via spectral basis multiplexing. Optics Express, 24(3):3180-3195, 2016;

[10] Nahum Gat. Imaging spectroscopy using tunable filters: a review. In Proceedings of SPIE, volume 4056, pages 50-64. International Society for Optics and Photonics, 2000;

[11] Utsav B. Gewali, Sildomar T. Monteiro, and Eli Saber. Spectral superresolution with optimized bands. 11(14):1648. Number: 14 Publisher: Multidisciplinary Digital Publishing Institute;

[12] Alexander F. H. Goetz. Three decades of hyperspectral remote sensing of the earth: A personal view. Remote Sensing of Environment, 113:S5-S16, 2009;

[13] Nathan Hagen and Michael W. Kudenov. Review of snapshot spectral imaging technologies. Optical Engineering, 52(9):090901, 2013;

[14] Andrew Robert Harvey and David William Fletcher-Holmes. Birefringent fourier-transform imaging spectrometer. Optics Express, 12(22):5368-5374, 2004;

[15] Alex Hegyi and Joerg Martini. Hyperspectral imaging with a liquid crystal polarization interferometer. Optics express, 23(22):28742-28754, 2015;

[16] Aurélie Jullien, Rémy Pascal, Umberto Bortolozzo, Nicolas Forget, and Stefania Residori. High-resolution hyperspectral imaging with cascaded liquid crystal cells. Optica, 4(4):400-405, 2017;

[17] Fayez Lahoud, Ruofan Zhou, and Sabine Susstrunk. Multi-modal spectral image super-resolution. ECCV 2018;

[18] Guolan Lu and Baowei Fei. Medical hyperspectral imaging: a review. Journal of Biomedical Optics, 19(1):010901, 2014;

[19] Alejandro Parada-Mayorga and Gonzalo R. Arce. Spectral super-resolution in colored coded aperture spectral imaging. 2(4):440-455;

[20] Katherine Salesin, Dario Seyb, Sarah Friday, and Wojciech Jarosz. Diy hyperspectral imaging via polarization-induced spectral filters. In 2022 IEEE International Conference on Computational Photography (ICCP), pages 1-12. IEEE, 2022;

[21] Kota Tsujimori, Jun Hirotani, and Shunta Harada. Application of Bayesian super-resolution to spectroscopic data for precise characterization of spectral peak shape. 51(2):712-717;

[22] Yiqi Yan, Lei Zhang, Jun Li, Wei Wei, and Yanning Zhang. Accurate spectral super-resolution from single RGB image using multi-scale CNN. In Jian-Huang Lai, Cheng-Lin Liu, Xilin Chen, Jie Zhou, Tieniu Tan, Nanning Zheng, and Hongbin Zha, editors, Pattern Recognition and Computer Vision, Lecture Notes in Computer Science, pages 206-217. Springer International Publishing;

[23] Chen Yi, Yong-Qiang Zhao, and Jonathan Cheung-Wai Chan. Spectral super-resolution for multispectral image based on spectral improvement strategy and spatial preservation strategy. 57(11):9010-9024. Conference Name: IEEE Transactions on Geoscience and Remote Sensing;

[24] P Jacquinot. New developments in interference spectroscopy. Reports on Progress in Physics, 23(1):267, 1960;

[25] Claude E Shannon. Communication in the presence of noise. Proceedings of the IRE, 37(1):10-21, 1949;

[26] P Fellgett. The theory of infrared sensitivities and its application to investigations of stellar radiation in the near infra-red. Ph. D. thesis, Univ. of Cambridge, 1958;

[27] P Jacquinot. New developments in interference spectroscopy. Reports on Progress in Physics, 23(1):267, 1954;

[28] Peter R Griffiths and James A De Haseth. Fourier transform infrared spectrometry. John Wiley & Sons, 2007;

[29] Siegfried Wartewig and Reinhard Neubert. Ir and raman spectroscopy: fundamental processing. Advanced drug delivery reviews, 57(8):1144-1170, 2005;

[30] David WT Griffith, William G Mankin, Michael T Coffey, Dyrk E Ward, and Allen Riebau. Ftir remote sensing of biomass burning emissions of co2, co, ch4, ch2o, no, no2, nh3, and n2o. Global biomass burning: Atmospheric, climatic, and biospheric implications, pages 230-239, 2012;

[31] Matthew J Baker, Julio Trevisan, Paul Bassan, Rohit Bhargava, Holly J Butler, Konrad M Dorling, Peter R Fielden, Simon W Fogarty, Nigel J Fullwood, Kelly A Heys, et al. Using fourier transform ir spectroscopy to analyze biological materials. Nature protocols, 9(8):1771-1791, 2014;

[32] David A Naylor and M Khaled Tahic. Interpolation of aliased spectra. Optics express, 15(20):12941-12957, 2007;

[33] Edwin T Jaynes and G Larry Bretthorst. Probability theory: The logic of science. Cambridge university press, 2003;

[34] Devinderjit Sivia and John Skilling. Data analysis: a Bayesian tutorial. OUP Oxford, 2006;

[35] Phil Gregory. Bayesian logical data analysis for the physical sciences: a comparative approach with Mathematca® support. Cambridge University Press, 2005; and

[36] Stefan Schmuck and Jakob Svensson. Fourier spectroscopy: A Bayesian way. International Journal of Spectroscopy, 2017:1-29, 2017.

Hyperspectral imaging

It is generally known that hyperspectral imaging has emerged as a powerful tool in various fields, providing unparalleled insights into the spectral characteristics of substances and entities. Hyperspectral imaging marks a profound evolution from traditional multispectral RGB imaging, which is limited to three broad spectral bands (red, R, green, G, and blue, B). Although RGB imaging approximates human visual perception, it inadequately captures the extensive spectral information inherent in the environment.

Transitioning from multispectral to hyperspectral imaging, the technology advances from capturing imagery in several broad bands to acquiring data in potentially hundreds of narrow spectral bands that span a broad portion of the electromagnetic spectrum, from visible light to the near-infrared and beyond [12]. The enhanced spectral resolution of hyperspectral imaging facilitates the identification and analysis of minor variances in material composition, fostering applications in diverse fields such as remote sensing, food safety, agriculture, medical imaging, and materials science [7, 4, 18, 6].

The foundation of hyperspectral imaging lies in the principles of spectral resolution, which can be achieved through the three primary phenomena absorption, dispersion, and interference, as described with further details in the following.

Absorption-based methods, such as those used in RGB cameras, employ color filters that selectively absorb certain wavelengths while transmitting others. As a disadvantage, these filters operate over broad spectral ranges, limiting their ability to capture fine spectral details.

Dispersion-based techniques, such as those used in prism-based spectrometers and grating elements, exploit the fact that different wavelengths of light refract at slightly different angles. By separating light into its component spectra, these methods enable the acquisition of high-resolution spectral information. Devices based on diffraction are, however, more challenging to design as the diffractive elements amplify the differences in optical path length between frequencies. The method has a long history in astronomy, where diffraction-based hyperspectral imagers are known as integral field spectrometers [1].

Interference-based methods, including interferometers and interferometric filters, rely on the superposition of waves to control the transmission of specific wavelengths. Interferometers, such as the Michelson or Mach-Zehnder interferometer designs, use the principle of constructive and destructive interference to analyze spectral information. Of particular importance to this is the concept of autocorrelation, i.e. interference of a signal with a delayed copy of itself. The autocorrelation function represents the similarity between the signal and its delayed version as a function of the delay. By varying the delay and measuring the resulting intensity, an interferogram is generated. The Fourier transform of this interferogram yields the power spectral density of the original signal, a process central to understanding the Wiener-Khinchin theorem. The latter states that the power spectral density of a signal is the Fourier transform of its autocorrelation function. This principle is leveraged in imaging Fourier transform spectrometers, where the interferogram is measured for each pixel in the image, enabling the reconstruction of the hyperspectral data cube [5]. Alternatively, interferometric filters, consisting of multiple thin-film layers, precisely control the transmission of specific wavelengths through interference effects of multiple copies of the incoming beam, resulting in narrow transmission bands [10].

Hyperspectral imagers can be further classified based on how they acquire the datacube $(x, y, \lambda)$, as follows. Push broom and whisk broom scanners, also known as spatial scanning systems, capture images over time by scanning the scene line by line or pixel by pixel. These systems offer high spatial and spectral resolution but require relative motion between the camera and the scene [3]. In the context of the datacube acquisition classification, these systems can be categorized as division of time (DoT) spectrometers. Band sequential scanners, or spectral scanning systems, acquire images of an area at different wavelengths sequentially. These systems often employ tunable filters, such as liquid crystal tunable filters (LCTF) or acoustooptical tunable filters (AOTF), to select specific wavelengths for each image frame [13]. While these methods provide high spectral resolution, they also fall under the division of time DoT category and hence, may be limited in terms of temporal resolution and require stable illumination conditions.

Snapshot hyperspectral imagers aim to capture the entire spatially and spectrally resolved image in a single shot, eliminating the need for scanning or sequential acquisition. Various approaches have been explored under the conceptual umbrella of integral field spectroscopy. A particularly popular approach for snapshot hyperspectral imaging includes microlens arrays coupled with dispersive elements like prisms [9] and compressed sensing techniques such as coded aperture snapshot spectral imaging (CASSI) [2]. Snapshot methods offer the advantage of capturing dynamic scenes but often involve trade-offs in terms of spatial or spectral resolution and may require extensive computational resources for image reconstruction.

Birefringent media for autocorrelation

Double-path interferometers such as the Michelson or Mach-Zehnder interferometer designs are very sensitive to environmental influences. Because of this, common-path designs are preferred in hyperspectral imagers and related devices. In such designs, two copies of the same signal travel (largely) along the same optical path. An advantageous way to achieve this is through birefringence. Birefringent materials exhibit different refractive indices for light polarized along different axes. Therefore, the s- and p-polarized components travel at different velocities through the medium and hence, accumulate delay. This property can be leveraged to create compact and robust spectrometers and integral field spectrographs. Several designs exist based on the general concept, as follows.

With the birefringent Fourier-transform imaging spectrometer proposed by Harvey and Fletcher-Holmes [14], the input light is polarized and passed through a birefringent interferometer consisting of a waveplate sandwiched between an input polarizer and a Wollaston prism. The waveplate introduces a path difference between the orthogonally polarized components, causing them to interfere when recombined by the Wollaston prism. As an alternative to Wollaston prisms, tunable delay differences between ordinary and extraordinary rays have been introduced using liquid crystal devices (see [15] and [16]).

The spectrometer of [14, 15, 16] are all variations of Fourier transform spectrometers and rely on the Fourier transform to retrieve the signal in frequency domain. As such, these methods are restricted to even sampling steps. The frequency resolution is inverse to the delay range and the frequency range is inverse to the delay step size.

An alternative approach, as demonstrated by Salesin et al. [20], leverages the wavelength-dependent polarization delay introduced by waveplates to create tunable spectral filters. In this design, one or more waveplates are sandwiched between two linear polarizers. The first polarizer sets the input polarization state, the waveplates introduce wavelength-dependent phase delays between the orthogonal polarization components, and the second polarizer (analyzer) converts these polarization variations into wavelength-dependent intensity modulations. By rotating the waveplates and analyzer, a continuous family of spectral filter functions can be realized. Deviating from the above techniques, e.g., [14, 15, 16], this design doesn't use a traditional interferometric setup.

As a general limitation, the above presented methods (with the exception of compressed sensing designs) encode and retrieve spectral information without regard to the underlying signal structure (features of the underlying signal). For avoiding this limitation, the following methods of including prior information have been proposed: Using a library of existing hyperspectral images at the desired resolution these methods directly learn a mapping from lower resolution by deep learning methods. [22, 8, 17]. Instead of a direct end to end mapping these libraries can also be used to learn a more sparse basis to code the information in which makes high resolution retrieval possible (e.g. dictionary learning [23, 11]). This directly relates to compressed sensing, which posits that the signal of interest is sparse in some prior chosen basis and exploits this constraint in an iterative reconstruction algorithm [2, 19]. Finally, probabilistic/Bayesian methods are known, that infer the most likely hyperspectral signal from measurements [21].

These models place strong constraints on the signal of interest. Either it has to be of a certain structure that was included in the data that was used for learning deep neural network maps or learned coding coefficients. Or in the case of compressed sensing it in has to have a known sparse representation. In the case of the Bayesian scheme the constraints are too weak at all and has only been shown to more accurately represent signals with a feature size on the same order like the original resolution. Furthermore, they only use the prior knowledge about the signal in its reconstruction from existing measurements but treat the whole measurement domain as essentially equally informative.

Fourier Transform Spectroscopy

It is generally known that Fourier Transform Spectroscopy (FTS) is a well-established autocorrelation technique for obtaining high-resolution spectra across a wide range of the electromagnetic spectrum. The core principle of FTS is the measurement of the interference pattern (interferogram) produced by combining a light beam with a delayed version of itself. This interference pattern is then Fourier transformed to obtain the spectrum of the light source, as described in the seminal work by Jacquinot (1960) [24]. Traditional FTS relies on the measurement of light intensity as a function of optical path difference (delay), with uniform sampling of the interferogram at intervals determined by the Nyquist-Shannon sampling theorem [25]. The spectrum is then obtained by applying the Fourier transform to convert the time-domain interferogram to a frequency-domain spectrum.

FTS has found widespread application in infrared spectroscopy, where it is commonly known as Fourier Transform Infrared Spectroscopy (FTIR). The popularity of FTIR is largely due to two key advantages. The first is Fellgett's advantage, also known as the multiplex advantage, which arises from the fact that all wavelengths are measured simultaneously, leading to a significant improvement in signal-to-noise ratio compared to scanning dispersive techniques [26]. The second is Jacquinot's advantage, or the throughput advantage, which allows FTS instruments to achieve much higher optical throughput than dispersive spectrometers, as they don't require narrow slits for high resolution [27].

These advantages have made FTIR a powerful tool in a wide range of applications. In chemistry and materials science, FTIR is used for molecular structure determination and polymer characterization [28]. The pharmaceutical industry employs FTIR for quality control and counterfeit detection [29]. Environmental scientists use FTIR for monitoring atmospheric pollutants [30], while in the biomedical field, it has applications in diagnostics and tissue imaging [31].

Fourier Transform Spectroscopy principles have been extended to enable imaging spectroscopy, contributing significantly to hyperspectral imaging. In imaging FTS, a separate FTS measurement is performed for each pixel on a camera sensor. This is typically achieved by coupling an imaging system to an interferometer. As the optical path difference is varied, a series of images is captured. The intensity variations of each pixel across this series form an interferogram, which is then Fourier transformed to obtain a spectrum for each spatial point.

This approach results in a three-dimensional data cube $(x, y, \lambda)$ where $x$ and $y$ are spatial coordinates and A represents wavelength. Imaging FTS maintains the high spectral resolution characteristic of FTS while providing spatial information. It has found applications in remote sensing for atmospheric studies and Earth observation, biomedical imaging for tissue analysis, and industrial quality control for mapping chemical compositions. The technique's flexibility in spectral range and resolution makes it adaptable to various scenarios, from broad spectral surveys to detailed studies of narrow spectral features.

While highly effective, the traditional FTS approach has limitations. It doesn't easily incorporate prior knowledge about the spectrum, requires uniform sampling, and provides no information about the uncertainty in the spectral estimate. These limitations have been recognized in the literature, with efforts to address them through various computational techniques [32]. Overcoming these limitations could significantly enhance the performance of FTS in all the aforementioned applications, potentially enabling faster measurements, higher resolution, or improved performance in challenging measurement conditions.

Bayesian inference

Bayesian inference is a generally known statistical method that updates the probability of a hypothesis as more evidence becomes available. Bayesian inference is based on Bayes' theorem, which relates the conditional and marginal probabilities of random events [33]. Prior approaches to spectral analysis using Bayesian methods have been limited in scope, e.g. infering single frequencies of periodic signals [35]. More extensive modeling of spectral parameters was done by Schmuck and Svensson [36], but was focused on finding the best hyperparameters for a specific type of interferometer realization. Most importantly they relied on specialized assumptions not generalizable to broader spectroscopic applications, like a Brownian bridge prior, whose structure does not harness the effectiveness of prior knowledge incorporation within the Bayesian framework.

Objective of the invention

It is an objective of the invention to provide an improved optical imaging apparatus for creating spectrally and spatially resolved image data of an input light field and/or to a spectral imaging method for creating spectrally and spatially resolved image data of an input light field, being capable of avoiding limitations and disadvantages of conventional techniques. In particular, creating the spectrally and spatially resolved image data is to be provided with enhanced spectral resolution of spectral data captured by optical sensors, improved fidelity of the spectral data, increased efficiency of data collection and/or processing, improved usage of prior knowledge on the measurement and/or extended practical applications, e.g., in terms of acquisition of enhanced spectral and polarimetric information.

Summary of the invention

These objectives are solved by an optical imaging apparatus and/or a spectral imaging method comprising the features of the independent claims. Advantageous embodiments and applications of the invention are defined in the dependent claims.

According to a first general aspect of the invention, the above objective is solved by an optical imaging apparatus, being configured for receiving an input light field and for creating spectrally and spatially resolved image data ($S_\omega$) of the input light field, said input light field having an input light field spectrum and two different polarization components.

The input light field comprises the light received from a scene to be imaged with spectral resolution. The scene may comprise e.g., at least one object to be imaged, at least one sample and/or at least one sample surface. The input light field may comprise light actively emitted by the scene, e. g., from a laser source, and/or light scattered, reflected or transmitted by a scene illuminated with a light source. The two different polarization components comprise parts of the input light field having different light polarizations. If the input light field is generally unpolarized, a polarizing element may be provided for producing polarized light, preferably with equal polarization components. The image data comprise spatially resolved data representing the input light field with spatial resolution in an imaging plane of the optical imaging apparatus.

The optical imaging apparatus comprises an autocorrelation device being configured for receiving the input light field, controlling a delay between the polarization components of the input light field and providing an autocorrelation light field including a superposition of the polarization components. The autocorrelation light field comprises the superposition of a first one of the polarization components with a delayed second one of the polarization components. Preferably, the autocorrelation device may be configured for varying the delay and adjusting different delays for multiple steps of light field collection.

Furthermore, the optical imaging apparatus comprises a photosensor device having at least one polarizing element and a photosensor (camera sensor) with a photosensor sensitivity spectrum and being configured for light field collection, in particular for receiving the autocorrelation light field and providing sensed spatially resolved light field sensor data ($F_\tau$), wherein the light field sensor data ($F_\tau$) include a superposition of the spectrally resolved image data ($S_\omega$) to be obtained and the light field sensor data ($F_\tau$) depend on said delay between the polarization components of the input light field.

Preferably, the at least one polarizing element, e.g., a polarization filter, may be directly coupled with and/or integrated in the photosensor, and/or it may be provided at the autocorrelation device (e.g., arranged between the autocorrelation device and the photosensor). Further preferably, in particular with the first variant, the photosensor device may comprise a two-dimensional array of photosensitive pixels (sensor elements), each comprising multiple sub-pixels (sensor sub-elements), wherein each of the sub-pixels is provided with a different polarization filter. Alternatively or additionally, the photosensor device may comprise a two-dimensional array of photosensitive pixel, each comprising multiple sub-pixels, wherein each of the sub-pixels is provided with a different combination of a spectral band sensitivity and a polarization filter. With particular applications for enhancing spectral resolution of a spectrometer, the photosensor device may comprise a single sensor element only.

Furthermore, the optical imaging apparatus comprises an image processor device being coupled with the photosensor device and being configured for calculating the spectrally resolved image data ($S_\omega$) based on the light field sensor data ($F_\tau$). Preferably, the image processor device may comprise at least one computer unit being configured for running a software for calculating the spectrally resolved image data ($S_\omega$). The at least one computer unit further may be configured for controlling the optical imaging apparatus or components thereof.

According to the invention, the image processor device is configured for calculating the spectrally resolved image data ($S_\omega$) by applying a regularized inversion to the light field sensor data ($F_\tau$), said inversion being constructed in dependency on prior information on at least one of the input light field, the spectrally resolved image data ($S_\omega$) and the optical imaging apparatus.

According to a second general aspect of the invention, the above objective is solved by a spectral imaging method for creating spectrally and spatially resolved image data ($S_\omega$) of an input light field having an input light field spectrum and two different polarization components. The spectral imaging method comprises the steps of receiving the input light field, controlling a delay between the polarization components of the input light field and providing an autocorrelation light field including a superposition of the polarization components, receiving the autocorrelation light field with a photosensor device having at least one polarizing element and providing sensed spatially resolved light field sensor data ($F_\tau$), wherein the light field sensor data ($F_\tau$) include a superposition of the spectrally resolved image data ($S_\omega$) to be obtained and the light field sensor data ($F_\tau$) depend on said delay between the polarization components of the input light field, and calculating the spectrally resolved image data ($S_\omega$) based on the light field sensor data ($F_\tau$) with an image processor device coupled with the photosensor device.

According to the invention, the spectrally resolved image data ($S_\omega$) are calculated by applying a regularized inversion to the light field sensor data ($F_\tau$), said inversion being constructed in dependency on prior information on at least one of the input light field, the spectrally resolved image data ($S_\omega$) and said steps of receiving the input light field, controlling the delay between the polarization components of the input light field, providing an autocorrelation light field, receiving the autocorrelation light field and/or providing the spatially resolved light field sensor data ($F_\tau$).

Preferably, the spectral imaging method of the second general aspect of the invention or an embodiment thereof may be executed with the optical imaging apparatus of the first general aspect of the invention or an embodiment thereof.

Advantageously, the above objective is solved by calculating the spectrally resolved image data ($S_\omega$) via solving the inverse problem because applying the regularized inversion provides multiple advantages. Firstly, the regularized inversion substantially accelerates the calculation of the spectrally resolved image data ($S_\omega$) because the conventional application of the Fourier transformation, e.g., in FTIR spectrometry, may be replaced by a matrix multiplication as outlined below. Furthermore, the regularized inversion allows to exploit not only prior knowledge about the signal of interest, i. e., of the scene to be imaged and/or the light field received, but also prior knowledge of the instrumental design, i. e., features of the optical imaging apparatus and/or the operation thereof. With the usage of prior information, the calculation of the spectrally resolved image data and/or increasing the spectral resolution of the measurement are substantially facilitated.

Applying the regularized inversion allows encoding and retrieving spectral information in consideration of the underlying signal structure (features of the underlying signal). This structure can be exploited to further enhance the spectral resolution (the number of retrieved spectral channels) of the signal beyond the limitations given by the instrumental design. This prior information restricts the space of possible signals which makes it possible to retrieve them from otherwise incomplete information. Thus, the invention allows enhancing spectral resolution in imaging and spectroscopic applications, while potentially also granting polarimetric information.

The inventors have found that the known techniques have substantial limitations, because existing solutions do not take full advantage of prior knowledge to constrain the solution space and impose strong constraints, either on the sampling conditions (e.g. in FFT-based approaches) or on the nature of the signal. For instance, regarding the physical implementation, existing techniques do not take advantage of the band-limited nature of many detectors to optimize the delay range. However, even features of the optical imaging apparatus, like the spectral sensitivity of the photosensor device, may be employed for constructing the regularized inversion.

According to a preferred embodiment of the invention, in terms of the optical imaging apparatus and/or the spectral imaging method, the light field sensor data ($F_\tau$) may be represented by multiplying a spectral system matrix ($A_{\tau\omega}$) with the spectrally resolved image data ($S_\omega$) according to $F_\tau = A_{\tau\omega} \cdot S_\omega$. According to this embodiment, the image processor device may be configured for calculating the spectrally resolved image data ($S_\omega$) by applying an inverted spectral system matrix ($A_{\tau\omega}^{+}$) according to $S_\omega = A_{\tau\omega}^{+} \cdot F_\tau$, wherein said inverted spectral system matrix ($A_{\tau\omega}^{+}$) depends on said prior information on at least one of the input light field, e.g., the input light field spectrum, the spectrally resolved image data ($S_\omega$), the optical imaging apparatus, e.g., the photosensor sensitivity spectrum and/or the delay, and said steps of receiving the input light field, controlling the delay between the polarization components of the input light field, providing an autocorrelation light field, receiving the autocorrelation light field and/or providing the spatially resolved light field sensor data ($F_\tau$).

Advantageously, this implementation of applying the regularized inversion by a matrix multiplication, provides an acceleration and increased efficiency of calculating the spatially resolved image data.

According to a further preferred embodiment of the inventive optical imaging apparatus, the autocorrelation device may be configured for controlling the delay between the polarization components of the input light field such that it is limited to at least one delay interval in which the autocorrelation light field provides non-vanishing contributions to the light field sensor data ($F_\tau$), and the image processor device may be configured for applying said regularized inversion to the light field sensor data ($F_\tau$), said inversion being constructed in dependency on the delay between the polarization components of the input light field. Accordingly, in terms of the spectral imaging method, the delay between the polarization components of the input light field may be controlled such that it is limited to at least one delay interval in which the autocorrelation light field provides non-vanishing contributions to the light field sensor data ($F_\tau$), and the image processor device may be configured for applying said regularized inversion to the light field sensor data ($F_\tau$), said inversion being constructed in dependency on the delay between the polarization components of the input light field.

Limiting the delay to at least one delay interval selected in dependency on the expected occurrence of non-vanishing contributions to the light field sensor data ($F_\tau$) in the autocorrelation light field, i. e., in dependency on prior information on the input light field, provides advantages for increasing the efficiency of spectral imaging. Outside the selected at least one delay interval, no delay needs to be set and no light field sensor data are measured. Furthermore, the delay modulation in the selected at least one delay interval may be selected in dependency on the spectral resolution to be obtained. Increasing the delay modulation in the selected at least one delay interval increases the spectral resolution and vice versa. Thus, hyperspectral imaging may be provided without substantially extending the measurement.

According to a particularly advantageous embodiment of the invention, the autocorrelation device may comprise at least one tunable birefringent element (crystal) (or: at least one birefringent element having tunable, e.g., adjustable or variable or controllable, birefringence). Birefringence means that the birefringent element has two distinct refractive indices depending on the polarization state of the incoming light (ordinary ray and extraordinary ray), resulting in different velocities of and correspondingly a delay between the polarization components. One or more tunable birefringent element(s) may be arranged for transmission of the input light field, wherein at least one of the birefringent element(s) has a birefringence that is tunable. Tunability of the birefringence means that the at least one of the birefringent element(s) may be arranged and/or changed such that specific different mutual delays of the polarization components of the light field may be set in a controlled manner. Advantageously, the at least one tunable birefringent element is configured for introducing the adjustable delay between the polarization components of the input light field by transmission through the at least one tunable birefringent element.

Particularly preferred, the at least one tunable birefringent element may comprise at least one of the following variants, including embodiments with active adjustment of the birefringence or passive tuning the effective birefringent delay acting on the input light field. According to a first variant, the at least one tunable birefringent element may comprise an arrangement of movable birefringent material with varying thickness, e.g., at least two wedge elements of birefringent material, being movable with respect to each other, and a Wollaston prism, wherein a delay control device is arranged for controlling the delay by moving the birefringent material. By moving the at least two wedge elements, provided e.g., like in a Soleil-Babinet compensator, the thickness of the birefringent material passed by the input light field is altered. In other words, by changing the optical path length in the material, one can vary the phase delay encountered by different polarization components of light, thereby affecting their interference patterns. This variant may have particular advantages in terms of precision and reproducibility of adjusting the delay between the polarization components.

Alternatively or additionally, according to a second variant, the at least one tunable birefringent element may be configured for having a variable angle of incidence, wherein the autocorrelation device is adapted for varying the delay by pivoting the birefringent material. The at least one tunable birefringent element may be provided like a Berek compensator. With this variant the angle at which light enters the birefringent material is adjusted, thus effectively changing the effective thickness of the material and hence, the delay induced by birefringence. Advantageously, this variant facilitates the adjustment of the delay between the polarization components, and it allows a simple retro-fitting of an existing imaging device, e.g., camera device for implementing the invention. Pivoting the birefringent material may be provided by a mechanical drive device or by hand of a user of the optical imaging apparatus.

Alternatively or additionally, according to a third variant, the at least one tunable birefringent element may comprise at least one liquid crystal element, wherein a delay control device is arranged for controlling the delay by controlling a voltage applied to the least one liquid crystal element. the birefringence of the material itself can be directly manipulated. For example, liquid crystal retarders exemplify this variant, wherein the orientation of liquid crystal molecules and consequently the material's birefringent properties are controlled by changes in voltage applied to the at least one liquid crystal element. This variant may have particular advantages in terms of precision and reproducibility of adjusting the delay between the polarization components

Particularly preferred, in terms of the optical imaging apparatus and/or the spectral imaging method, if the at least one tunable birefringent element comprises said at least one pivotable birefringent element having the variable angle of incidence, the at least one pivotable birefringent element may be fixedly connected with the photosensor device and the at least one pivotable birefringent element and the photosensor device may be commonly pivotable relative to the input light field for controlling the delay. With this embodiment, the delay may be controlled by commonly pivoting the at least one pivotable birefringent element and the photosensor device. Advantageously, this allows changing the delay between the polarization components simply by changing the angle of incidence of the input light field relative to the photosensor device. Images of the scene may be registered by the image processing device, using e.g., an available image registration or stabilization process, so that so that reconstruction is performed with photosensor pixels from fixed parts of the scene even during changing the angle of incidence. Advantageously, a continuous change or a step-wise change of the angle of incidence may be provided.

According to a further preferred embodiment of the invention, if the photosensor sensitivity spectrum of the photosensor comprises at least one sensitivity band, e. g., a red sensitivity band, a green sensitivity band and/or a blue sensitivity band, the autocorrelation device may further comprise at least one offset birefringent element being dimensioned such that the delay between the polarization components induced by the offset birefringent element is equal to the inverse of the spectral width of the at least one sensitivity band. In terms of the spectral imaging method, the delay between the polarization components may be controlled to be equal to the inverse of the spectral width of the at least one sensitivity band.

Advantageously, the provision of the at least one offset birefringent element allows targeted shifting the modulation of the delay to at least one delay interval corresponding to the at least one sensitivity band.

As a further advantage, the invention may be employed in practice with various different configurations of the scene and/or the input light field, thus extending the application range of the invention.

According to a preferred embodiment, the autocorrelation device may be arranged to be exposed for directly receiving a field of collimated light rays from a coherent light source as the input light field. In terms of the spectral imaging method, the input light field may comprises a field of collimated light rays from a coherent light source, preferably directly received by the autocorrelation device. Advantageously, the adjustment of the optical imaging apparatus is facilitated with this embodiment. This embodiment may have advantages for spectrally and spatially resolved imaging a light field of a light source, e.g., a laser source.

According to an alternative embodiment, a first imaging lens may be arranged in front of the autocorrelation device for receiving the input light field at high numerical aperture, in particular an aperture for which deteriorating smearing of the spectrum would be caused by the angular dependence of the birefringent material, e.g., a numerical aperture of at least 0.1, and directing the input light field as a field of collimated light rays onto the autocorrelation device, and a second imaging lens may be arranged between the autocorrelation device and the photosensor device for imaging the autocorrelation light field on the photosensor device. In terms of the spectral imaging method, the input light field may be received with a high numerical aperture and converted with a first imaging lens into a field of collimated light rays before controlling the delay between the polarization components and the autocorrelation light field may be imaged with a second imaging lens on the photosensor device. Advantageously, this embodiment is suitable in particular for spectrally resolved imaging real life scenes.

According to a further alternative embodiment, the autocorrelation device may be exposed for directly receiving a field of near-collimated light rays, in particular originating from a far object, and a first imaging lens may be arranged between the autocorrelation device and the photosensor device for imaging the autocorrelation light field on the photosensor device. In terms of the spectral imaging method, the input light field may comprise a field of near-collimated light rays, in particular originating from a far object, and the autocorrelation light field may be imaged with a first imaging lens on the photosensor device. Advantageously, this embodiment is suitable in particular for spectrally resolved imaging real life scenes as well.

According to another alternative embodiment, an array of micro-lenses (sublenses) may be arranged in front of the photosensor device, wherein the autocorrelation device may be is exposed for directly receiving a field of light rays, in particular originating from a far object, a first imaging lens may be arranged between the autocorrelation device and the photosensor device for imaging the autocorrelation light field on the array of micro-lenses, and the array of micro-lenses may be arranged for light field imaging the autocorrelation light field onto the photosensor device. In terms of the spectral imaging method, the input light field may comprise a field of light rays, in particular originating from a far object, and the autocorrelation light field may be imaged with a first imaging lens on an array of micro-lenses being arranged for light field imaging the autocorrelation light field onto the photosensor device.

According to a particularly preferred embodiment of the invention, the optical imaging apparatus may comprise a mobile camera device, e.g. of a mobile phone or a mobile computer, like a tablet computer, including a camera unit, wherein the photosensor device is provided by the camera unit coupled with the at least one polarizing element, the autocorrelation device is fixedly arranged in front of the camera unit, and the mobile camera device is configured for varying the delay between the polarization components of the input light field by at least one of turning the mobile camera device relative to a scene to be imaged, moving a scene to be imaged relative to the camera device and simultaneously collecting the input light field from different spectrally equal portions of a scene to be imaged, said different spectrally equal portions having different angles relative to the camera device.

Advantageously, the invention allows retro-fitting a mobile phone device or a mobile computer device provided with a camera unit for hyperspectral imaging by providing the at least one polarization element connected with the camera unit for and by including the image processing device in the computer unit of the mobile phone device.

It is noted that a mobile phone device or a mobile computer device being configured as an optical imaging apparatus of the invention or an embodiment thereof and being configured for hyperspectral imaging and/or the implementation of an optical imaging apparatus of the invention or an embodiment thereof by a mobile phone device or a mobile computer device are considered as independent subjects of the present invention.

In terms of the spectral imaging method, the photosensor device may be provided by a camera unit of a mobile camera device, e.g. of a mobile phone, coupled with the at least one polarizing element, the autocorrelation device may be fixedly arranged in front of the camera unit, and the delay between the polarization components of the input light field may be varied by at least one of turning the mobile camera device relative to a scene to be imaged, moving a scene to be imaged relative to the camera device and simultaneously collecting the input light field from different spectrally equal portions of a scene to be imaged having different angles relative to the camera device.

According to a further advantageous embodiment of the invention, the image processor device may be configured for quantifying a probability of the spectrally resolved image data ($S_\omega$).

In terms of quantifying a probability of the spectrally resolved image data, an objective of the invention can be seen in providing an improved spectral imaging method for creating spectrally and spatially resolved image data (spectrum data reconstruction method for reconstructing spectrally resolved spectrum data of a measuring light field and/or a related interferometric autocorrelation measurement method) and related optical imaging apparatuses (spectrum data reconstruction and/or interferometric autocorrelation measurement apparatuses), allowing an improvement of reconstructing spectrally and spatially resolved spectrum data of a measuring light field in terms of reconstruction precision, reconstruction speed, reconstruction resolution, capability of introducing prior knowledge about the spectrum data, allowing uniform or non-uniform sampling, and/or providing information about the uncertainty in the spectral estimate.

For quantifying a probability of the spectrally resolved image data, a spectrum data reconstruction method for reconstructing spectrally resolved spectrum data (S) (in particular: computing a spectral estimate) of a measuring light field from sensor data ($F_\tau$) is disclosed, said sensor data ($F_\tau$) being provided by an interferometric autocorrelation measurement of interferogram data (interfer-ograms) each being created by pairwise superimposing delayed versions of the measuring light field, said delayed versions of the measuring light field having different mutual delays (i). The term spectrum data refers to a data set representing a spectrum, e.g., an absorption, transmission and/or emission radiation spectrum, of a sample to be investigated. The measuring light field is a light field created by an interaction of the sample with measuring light.

According to this embodiment, a spectral system matrix ($R_{\tau\omega}$) is provided, wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays (i) and instrument parameters of a spectrometer apparatus employed for the interferometric autocorrelation measurement.

Furthermore, according to this embodiment, an initial prior estimate ( $\mu_S^{prior}$ ) and an initial prior covariance ( $\Sigma_S^{prior}$ ) of the spectrum data (S) are provided. This prior information may be provided e.g., on the basis of earlier comparable reference measurements, numerical simulations and/or by initial default estimates.

Furthermore, according to this embodiment, a mean estimate ($\mu_S$) and a covariance ($\Sigma_S$) of the spectrum data ($S_\omega$) are calculated by applying a Bayesian inference computation employing the sensor data ($F_\tau$), the spectral system matrix ($R_{\tau\omega}$), the initial prior estimate ( $\mu_S^{prior}$ ) the initial prior covariance ( $\Sigma_S^{prior}$ ) and the initial prior covariance ( $\Sigma_S^{prior}$ ), and the mean estimate ($\mu_S$) and optionally the covariance ($\Sigma_S$) of the spectrum data ($S_\omega$) are output as the spectrum data (S) to be reconstructed. Output of both of the mean estimate ($\mu_S$) and the covariance ($\Sigma_S$) may be preferred for providing all available information on the measurement. Alternatively, output of the mean estimate ($\mu_S$) may be sufficient fir characterizing the sample to be investigated.

Furthermore, for quantifying a probability of the spectrally resolved image data, an interferometric autocorrelation measurement method is disclosed, comprising the steps of providing a measuring light field, measuring sensor data ($F_\tau$) by an interferometric autocorrelation measurement of interferogram data created by pairwise superimposing delayed versions of the measuring light field, said delayed versions of the light field having different mutual delays (i), and applying the above spectrum data reconstruction method, or an embodiment thereof, to the sensor data ($F_\tau$).

Furthermore, according to this embodiment, a spectrum data reconstruction apparatus is disclosed, which is configured for reconstructing spectrally resolved spectrum data (S) of a measuring light field from sensor data ($F_\tau$) provided by an interferometric autocorrelation measurement of interferogram data created by pairwise superimposing delayed versions of the measuring light field, said delayed versions of the measuring light field having different mutual delays (i).

According to this embodiment, the spectrum data reconstruction apparatus includes a data processing device being configured for providing a spectral system matrix ($R_{\tau\omega}$), wherein the sensor data ($F_\tau$) are determined by applying the spectral system matrix ($R_{\tau\omega}$) to the spectrum data ($S_\omega$) to be obtained, said spectral system matrix ($R_{\tau\omega}$) being created in dependency on the delays (i) and instrument parameters of an spectrometer apparatus employed for the interferometric autocorrelation measurement, providing an initial prior estimate ( $\mu_S^{prior}$ ) and an initial prior covariance ( $\Sigma_S^{prior}$ ) of the spectrum data (S), calculating a mean estimate ($\mu_S$) and a covariance ($\Sigma_S$) of the spectrum data ($S_\omega$) by applying a Bayesian inference computation employing the sensor data ($F_\tau$), the spectral system matrix ($R_{\tau\omega}$), the initial prior estimate ( $\mu_S^{prior}$ ) the initial prior covariance ( $\Sigma_S^{prior}$ ) and the initial prior covariance ( $\Sigma_S^{prior}$ ), and output of the mean estimate ($\mu_S$) of the spectrum data ($S_\omega$) and optionally the covariance ($\Sigma_S$) as the spectrum data (S) to be reconstructed.

Preferably, the spectrum data reconstruction apparatus may be configured for executing the above spectrum data reconstruction method or an embodiment thereof.

Furthermore, according to this embodiment, an interferometric autocorrelation measurement apparatus being configured for measuring spectrally resolved spectrum data (S) of a measuring light field, comprising a measuring device including a sensor device being arranged for providing sensor data (Fτ) provided by an interferometric autocorrelation measurement of interferogram data created by pairwise superimposing delayed versions of the measuring light field, said delayed versions of the measuring light field having different mutual delays (i), and the above spectrum data reconstruction apparatus.

Furthermore, a computer-implemented device programmed to perform a method according to the invention or an embodiment thereof, and a computer program product which, when loaded into a computer-implemented device, executes a method according to the invention, or an embodiment thereof. The computer-implemented device may be integrated in a measuring device or may be provided as a separate computer unit.

Advantageously, the inventors have found a computational method for enhancing efficiency in spectroscopic applications, particularly in the domain of the inventive optical imaging apparatus. This method, also termed as Bayesian Autocorrelation Spectroscopy (BAS), applies principles of Bayesian inference and information theory to the process of spectral reconstruction from interferometric measurements, in particular at each single pixel of a photosensor device of the optical imaging apparatus.

With the present embodiment, the above limitations of conventional techniques are addressed by applying Bayesian inference. The inventors have found that the combination of calculating spectrally resolved image data via solving the inverse problem through applying the regularized inversion (applying the spectral system matrix) with applying Bayesian methods provides multiple advantages. In particular, the invention allows incorporating prior knowledge about the spectrum, handling non-uniform sampling naturally, providing quantitative measures of uncertainty in the spectral estimate, and enabling adaptive sampling strategies based on information theory [34]. BAS is employed for implementing the FTS process as a sequential Bayesian update (one update step or multiple update steps), providing a probabilistic framework for spectral estimation. In particular, the inventors, employing Gaussian assumptions for both the prior and likelihood distributions in Bayesian inference, have found the formulation of closed-form update equations for the mean and covariance of the spectral estimate, allowing an efficient numerical calculation, in particular wit a step-wise refinement of the spectral estimate.

As a further substantial advantage, this embodiment can be applied to the optical imaging apparatus setup to improve its performance without requiring hardware modifications. It also provides a foundation for developing new, more efficient spectroscopic instruments by enabling information-theoretic optimization of sampling strategies.

The combination of an autocorrelation measurement with Bayesian inference forms the foundation for this embodiment, aiming to enhance spectral resolution and measurement efficiency in spectroscopic applications. This approach builds upon recent advancements in Bayesian spectral analysis [35], and extends them to the specific context of Fourier transform spectroscopy. By doing so, it is capable of extending the boundaries of what is achievable in spectroscopic measurements across a wide range of scientific and industrial applications.

Advantageously, the mean estimate ($\mu_S$) providing the (most) probable spectrum and the covariance ($\Sigma_S$) providing information about the uncertainty and how this uncertainty correlates between different spectral channels of the spectrum data are calculated. The covariance represents an error estimate of the reconstruction, resulting in a substantial advantage over conventional techniques.

Preferably, the spectrum data reconstruction method may include further steps of repeatedly calculating an updated mean estimate ($\mu_S$) and an updated covariance ($\Sigma_S$) of the spectrum data ($S_\omega$) by applying the Bayesian inference computation, wherein for each update calculation a previously calculated mean estimate ($\mu_S$) and covariance ($\Sigma_S$) of the spectrum data ($S_\omega$) are employed as a current prior estimate ($\mu_S^{prior}$) and a current prior covariance ($\Sigma_S^{prior}$), and after termination of the repeatedly updating steps, output of the updated mean estimate ($\mu_S$) and optionally the updated covariance ($\Sigma_S$) of the spectrum data ($S_\omega$) as the spectrum data (S) to be reconstructed.

Advantageously, the closed-form update equations for the mean and covariance of the spectral estimate allow for the continuous refinement of the spectral estimate, e.g., as new measurements are taken, incorporating both the new data and the existing uncertainty in the estimate. Termination of the repeatedly updating steps may be set in dependency on particular application conditions by a predetermined termination criterion, e.g., by comparing the covariance with a predetermined reference value or testing the number of iterations.

Particularly preferred, the spectrum data reconstruction method may include further steps of calculating multiple values of an information gain for potential delay values using the calculated covariance ($\Sigma_S$) of the spectrum data ($S_\omega$), and output of a selected delay value ($\tau_{next}$) which provides a maximum value of the information gain.

In terms of the interferometric autocorrelation measurement method of the invention, the multiple values of the information gain may be calculated for potential delay values using the calculated covariance ($\Sigma_S$) of the spectrum data ($S_\omega$), and the selected delay value ($\tau_{next}$) which provides the maximum value of the information gain, is employed for measuring subsequent sensor data ($F_\tau$).

Accordingly, this embodiment of the invention provides a framework for quantifying the information content of each measurement. This enables an adaptive sampling strategy, where the next measurement delay can be chosen to maximize the expected information gain. Such strategies have the advantageous potential to significantly reduce the number of measurements required for a given spectral resolution, thereby improving the efficiency of spectroscopic techniques.

Preferably, the spectrum data reconstruction method may include a further step of calculating a Fourier transform of the sensor data ($F_\tau$) for obtaining a Fourier estimate ($\mu_S^{Fourier}$) of the spectrum data ($S_\omega$), wherein the mean estimate ($\mu_S$) and optionally the covariance ($\Sigma_S$) of the spectrum data ($S_\omega$) is calculating by applying the Bayesian inference computation further employing the Fourier estimate ($\mu_S^{Fourier}$). Advantageously, the Fourier transform of the sensor data ($F_\tau$) provides an additional prior information improving the result of the Bayesian inference computation

Advantageously, multiple variants are available for providing the initial prior estimate ($\mu_S^{prior}$) and the initial prior covariance ($\Sigma_S^{prior}$). One or more of the variants may be selected depending on the application conditions of the invention. According to preferred variants, a reference database of relevant spectra, data of previously measured spectra, e.g., of similar samples, and/or measuring light source characteristics, e.g., for absorption experiments, may be employed as sources of the prior information.

Preferably, the step of providing the initial prior estimate ($\mu_S^{prior}$) may include providing multiple different model prior estimates ($\mu_{model}^{prior}$) a step of prior model averaging the model prior estimates ($\mu_{model}^{prior}$), comprising at least one of calculating weights for each model prior estimate ($\mu_{model}^{prior}$) based on a Leave-One-Out Cross-Validation (LOO-CV) score, and calculating weighted average of spectral estimates from the model prior estimates ($\mu_{model}^{prior}$).

The invention can be applied for reconstructing spectrally resolved spectrum data of a measuring light field collected with the inventive optical imaging apparatus or an embodiment thereof. Advantageously, the application of the invention covers imaging measurements. Accordingly, the sensor data ($F_\tau$) may comprise spatially resolved sensor data measured with multiple sensor elements (pixels) of a two-dimensional photosensor, and the spectrally resolved spectrum data (S) may be separately reconstructed for each of the sensor elements.

In summary, the present invention is capable of enhancing the capabilities of the optical imaging apparatus through the application of Bayesian inference methods. The invention allows to incorporate prior knowledge about the spectrum into the reconstruction process, allowing for more robust results in challenging measurement conditions, provides quantitative uncertainty estimates for spectral reconstructions, enhancing the reliability of spectroscopic measurements, enables efficient non-uniform and adaptive sampling strategies to reduce measurement time and data acquisition requirements, and develops a flexible framework that can be applied to the optical imaging apparatus.

By these advantages, the invention substantially advances the field of spectroscopy, offering improved performance and new capabilities across a wide range of scientific and industrial applications that rely on high-resolution spectral analysis.

Brief description of the drawings

Further advantages and details of the invention are described in the following with reference to the attached drawings, which schematically show in:

Figure 1: features of an optical imaging apparatus and a spectral imaging method according to embodiments of the invention;

Figures 2 to 5: features of further embodiments of the invention with different imaging configurations;

Figure 6: illustrations of photosensors of a photosensor device included in an optical imaging apparatus according to embodiments of the invention;

Figure 7: an illustration of a probabilistic reconstruction of spectral data;

Figures 8 to 10: flowcharts illustrating embodiments of quantifying a probability of the spectrally resolved image data; and

Figure 11: an embodiment of an optical imaging apparatus adapted for quantifying a probability of the spectrally resolved image data.

<u>Detailed description of preferred embodiments of the invention</u>

Features of preferred embodiments of the invention are described in the following with particular reference to the configuration of the optical imaging apparatus and the execution of the spectral imaging method, in particular the data processing and mathematical background thereof. Details of designing and/or controlling components of the optical imaging apparatus, like the autocorrelation device, imaging optics and/or the photosensor device, are not described as far as they are known per se from conventional techniques, e.g., summarized above. As an alternative to employing birefringent material for creating the autocorrelation field, interferometer configurations could be used, as known from conventional FTIR spectrometry. Calculations are implemented based on discretized sensed data as known per se from conventional numerical techniques.

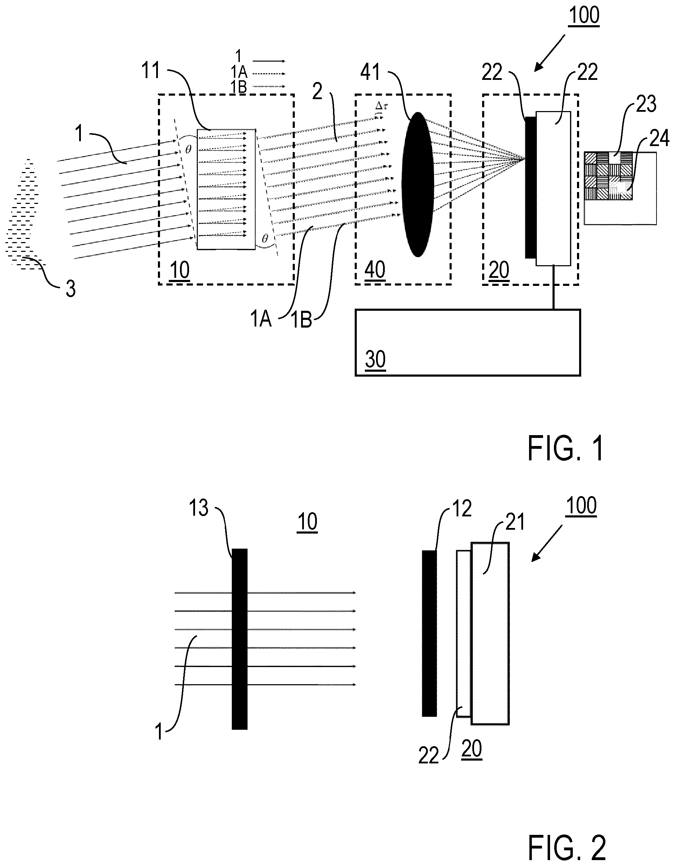

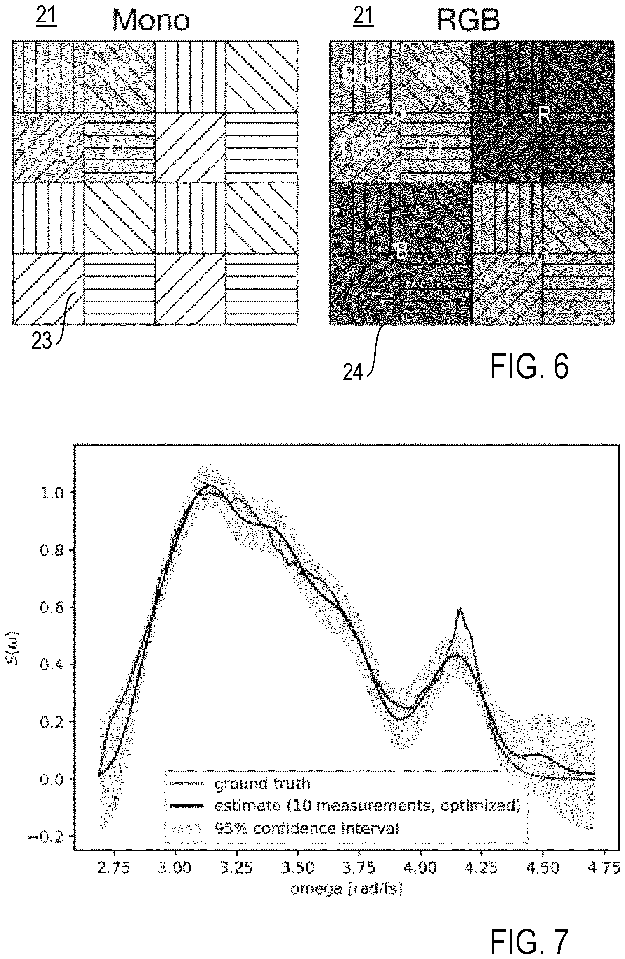

Figure 1 schematically shows features of embodiments of an optical imaging apparatus 100 comprising an autocorrelation device 10, a photosensor device 20, an image processor device 30 and imaging optics 40. The optical imaging apparatus 100 is arranged for spectral imaging a scene 3. Firstly, an input light field 1, including a parallel or near-parallel light field, is received from the scene 3. A delay between polarization components 1A, 1B of the input light field 1 is controlled with the autocorrelation device 10, which comprises at least one tunable birefringent element 11, e.g., a tunable birefringent medium, and which provides an autocorrelation light field 2 including a superposition of the polarization components 1A, 1B. The autocorrelation light field 2 is relayed via the imaging optics 40 including at least one imaging lens 41 to the photosensor device 20. The photosensor device 20 comprises a polarization sensitive photosensor 21, e.g., an array of sensor elements 23 coupled with a polarizing element 22. Groups of 2 * 2 sensor elements 23 provide a macro-pixel as described below, in particular with reference to Figures 6. The photosensor device 20 receives the autocorrelation light field 2 with the polarization sensitive photosensor and provides an output signal representing sensed spatially resolved light field sensor data. The light field sensor data are input to the image processor device 30 for calculating the spectrally resolved image data to be obtained.

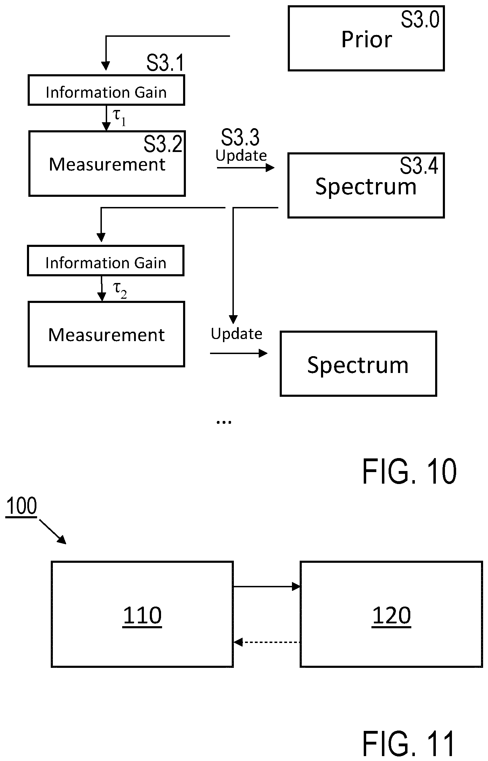

The autocorrelation device 10, the photosensor device 20 and the imaging optics 40 provide a measuring device 110 as shown in Figure 11, while the image processor device 30 provides a spectrum data reconstruction apparatus 120 as shown in Figure 11.

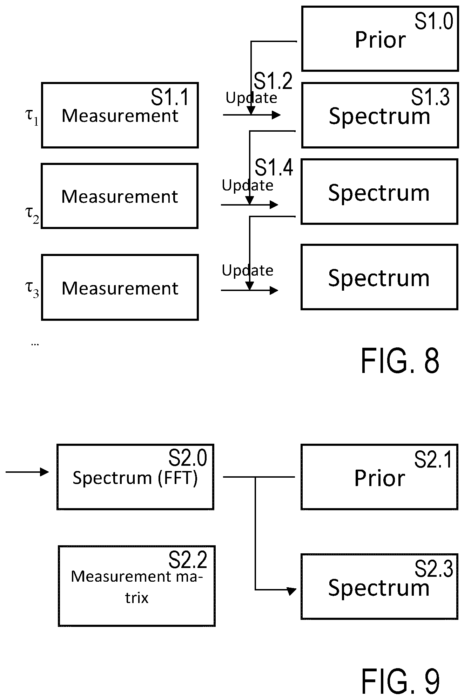

Details of setting the delay between the polarization components 1A, 1B employing the tunable birefringence, encoding spectral information via the delay, and retrieval of spectral information are described in the following. Subsequently, variants of imaging design, in particular the imaging optics 40, are described with reference to Figures 2 to 7. Figures 8 to 11 illustrate details of embodiments of the invention implementing a quantification of a probability of the spectrally resolved image data, which may be applied with the embodiments of the invention, in particular described with reference to Figures 1 to 7.

<u>Tunable birefringence</u>

The at least one tunable birefringent element 11 of the autocorrelation device 10 may comprise e.g., an arrangement of movable birefringent material with varying thickness, at least one pivotable birefringent element, and/or at least one liquid crystal element. The delay between polarization components is set with these variants as follows.

Birefringent material with varying thickness

Birefringent material with varying thickness may be provided e.g., by a pair of wedge elements of birefringent material, being movable with respect to each other. Alternatively, two wedge elements, provided like in a Soleil-Babinet compensator may be employed. By changing the thickness of the birefringent material passed by the input light field, the phase delay of the different polarization components of light is varied.

The phase delay induced by birefringence in a material of thickness $d$ can be expressed as:

$$\Delta\phi(\lambda) = \frac{2\pi}{\lambda}(n_e(\lambda) - n_o(\lambda))d$$ where $\lambda$ is the wavelength of the light. This formula highlights the direct relationship between the material's birefringence, its thickness, and the induced phase delay. As indicated, birefringent materials also exhibit dispersion, meaning that the delay is a function of wavelength. This effect becomes increasingly pronounced the thicker the birefringent material. For precision measurements, it may be preferred to make sure that the system is operated at stabilized temperature like during calibration or to calibrate the dispersion as a function of temperature.

Effect of angle of incidence and birefringent delay - Pivotable birefringent element

The effect of the angle of incidence on birefringent delay leverages the geometric path difference encountered by the input light field 1 as it traverses the birefringent material at different angles. When light enters the birefringent material at an angle other than normal incidence, the effective path length through the material - and hence the phase delay - depends not only on the material's thickness and birefringence but also on the angle of incidence. This leads to two effects: Firstly, the inherent birefringence of the material varies with the angle between the wave vector k and the optic axis of the birefringent material (**B**). Secondly, the physical path length through the birefringent material is varied.

Assuming the birefringent crystals are aligned in a plane perpendicular to the optical axis of the system ($\hat{z}$), the refractive indices for the normal modes of light propagating through the material are given by:

$$n(\theta) = \sqrt{\frac{n_o^2 n_e^2}{n_o^2 \sin^2(\theta) + n_e^2 \cos^2(\theta)}} \quad \text{and} \quad n_o \tag{1}$$

where $n_o$ and $n_e$ denote the ordinary and extraordinary refractive indices, respectively, and
$\theta = \arccos(\hat{\mathbf{B}} \cdot \hat{\mathbf{k}})$ is the angle between the propagation direction of light ($\hat{\mathbf{k}}$) and the optic axis of the birefringent material ($\hat{\mathbf{B}}$).

In this context, assuming that the 0° and 90° polarization components of the propagating input light field ray align with the material's normal modes, the birefringence $\Delta n$ is simply the difference between the refractive indices for these components, i.e., $n(\theta) - n_o$.

Therefore, the total delay $\tau$ introduced by the material to the polarization components of the light can be expressed as:

$$\tau(\theta) \propto \frac{n(\theta) - n_o}{\cos(\theta)} \tag{2}$$

highlighting the angular dependence of the delay on both the material's birefringence and the geometric configuration of the light's path through the material. It should be noted that the angle along the axis of birefringence has a much larger influence on the delay than the purely geometric delay along the perpendicular axis.

Delay differences due to different angles of incidence can be seen as both beneficial and detrimental, depending on the setup. For measurements with coherent laser sources it may be preferred to reduce the sensitivity due to the light's angle of incidence. In this case it is preferred to use two liquid crystal cells with mirrored orientation to cancel out the effect.

Conversely, for imaging and microscopy applications, one can use the angle dependence to passively change delay between polarization components as an object is tracked through a scene, i. e. by turning the photosensor device relative to a scene to be imaged, moving a scene to be imaged relative to the photosensor device, and/or simultaneously collecting the input light field from different spectrally equal portions of the scene to be imaged having different angles relative to the photosensor device.

Tuning Dispersion in Liquid Crystals

Dispersion in liquid crystals arises from their anisotropic molecular structure, which means their optical properties vary depending on the direction of light propagation relative to the molecule's orientation. This anisotropy leads to birefringence. The difference in these refractive indices ($n_e - n_o$), where $n_e$ is the refractive index for the extraordinary ray and $n_o$ is for the ordinary ray, is a measure of the material's birefringence.

Liquid crystals are particularly suited for tunable birefringence due to their unique molecular arrangement, which can be easily altered by external electric fields. When a voltage is applied, the orientation of the liquid crystal molecules changes, leading to a modification in the material's birefringent properties. This property is used for adjusting the birefringence and accordingly the delay between polarization components of the input light field 1.

The change in molecular orientation affects both refractive indices ($n_e$ and $n_o$) but does so differently, thereby allowing for precise control over the phase delay ($\Delta\varphi$) induced between the ordinary and extraordinary rays. Again, for precision measurements, it may be preferred to make sure that the system is operated at stabilized temperature like during calibration or to calibrate the dispersion as a function of temperature.

Encoding spectral information via the delay

The calculation of spectrally and spatially resolved image data of the input light field is based on encoding spectral information of a signal via its autocorrelation. Physically that is achieved by the fact that light with the same polarization will interfere either constructively or destructively as a function of delay $\tau$ and frequency $\omega$. For two copies of the same amplitude the resultant intensity $I$ is:

$$I(\tau) = I(\omega)[1 + \cos(\omega\tau)] \tag{3}$$

This kind of encoding spectral information is the basis for techniques such as Fourier transform spectroscopy, which usually relies on Michelson interferometers or similar devices to create two delayed copies of the same pulse. In the case of delay induced due to birefringence the two copies are not spatially separated but exist in the polarization components, the ordinary and extraordinary rays 1A, 1B. These experience interference when a polarizer, i.e., the at least one polarizing element of the photosensor device, is used to map their electric fields into the same polarization plane.

To quantify the spatial measurement over time at a specific location, $\mathbf{r}$, the intensity, $I(r, t)$, is integrated over time. This process effectively captures the cumulative effect of light's interaction with the material, as represented by the squared magnitude of the electric field, $E(r, \omega)$, over a range of frequencies, $\omega$. Mathematically, this relationship is expressed as:

$$F(\mathbf{r}) = \int_{-\infty}^{\infty} I(\mathbf{r}, t)\, dt = \int_{-\infty}^{\infty} |E(\mathbf{r}, \omega)|^2 \, d\omega$$

This equation forms the basis for connecting the spatially resolved intensity measurement, $F(r, \tau)$ (all spatially resolved light field sensor data, presented as a vector, also indicated as $F_\tau$), with the electric field's frequency spectrum, illustrating how spectral information is encoded in the light's polarization states.

The invention further refines its theoretical model by treating the spectrum as a sum of multiple Gaussian distributions. Each Gaussian represents a spectral line, characterized by its central frequency $(\omega_i)$, amplitude $(S_{\omega i})$, and standard deviation $(\sigma_i)$, signifying the line's width. This spectrum is mathemitically formulated as:

$$S(\omega) = \sum_i S_{w_i} \exp\left(-\frac{(\omega - \omega_i)^2}{\sigma_i^2}\right)$$

In practice, the measurement $F(r, \tau)$ integrates this spectrum over frequency, incorporating a term that models the interference effects induced by a specific delay, $\tau$, between different polarization states. This yields:

$$F(\mathbf{r}, \tau) = 2\int_{-\infty}^{\infty} \sum_i S_{\omega_i} \exp\left(-\frac{(\omega - \omega_{i,\mathbf{r}})^2}{\sigma_{i,\mathbf{r}}^2}\right)(1 + \cos(\omega\tau))\, d\omega$$

This formulation highlights the invention's feature of interpreting the interaction of light with the material as an inverse problem. By incorporating interference patterns through the cosine term modulated by $\omega\tau$, the model simplifies the analysis process, reducing the necessity for direct Fourier trans- formation of the light's spectrum.

Finally, when considering the application of spectral filters, similar to those used in RGB cameras, it is preferred to include the sensor's quantum efficiency as a function of frequency into the model. This addition adjusts for the sensor's frequency-dependent response, ensuring the model accurately reflects the physical measurement process:

$$F(\mathbf{r}, \tau) = 2\int_{-\infty}^{\infty} \sum_i S_{\omega_i} \exp\left(-\frac{(\omega - \omega_{i,\mathbf{r}})^2}{\sigma_{i,\mathbf{r}}^2}\right)(1 + \cos(\omega\tau))\, Q(\omega)\, d\omega \tag{4}$$

Incorporating $Q(\omega)$ to represent the spectral efficiency function of the sensor underscores the comprehensive nature of the model. This approach meticulously combines spatial, spectral, and sensor characteristics, laying a robust theoretical groundwork for the invention

Retrieval of spectral information

Given a trace of $F(\tau)$ for different delays, it is possible to reconstruct the spectral intensity $S(\omega)$. The arguably most prominent method to do this would be via Fourier transform of the signal. The spectral resolution and range are inversely proportional to the total range of delays and the step size, respectively. However, many tuning methods do not inherently produce equidistant delays in time. In fact, birefringent materials exhibit dispersion due to which different parts of the spectral are subject to different delays.

Therefore, according to the invention, the retrieval can be achieved by noticing that the above formulation of the measurement is a linear superposition of the interference of each frequency component that maps the spectral intensity on the measured intensity through

$$F_\tau = A_{\tau\omega} S_\omega \tag{5}$$

which is essentially the discrete version of Eq. (4). This allows for treating the method as an inverse problem with a multitude of solution strategies with considerable advantages over solution by Fourier transform.

The most straightforward approach is to solve for $S_\omega$ by linear regression, which means inverting the linear equation and solving for

$$S_\omega = A_{\tau\omega}^{+} F_\tau \tag{6}$$

In this case the resolution and spectral range are not dependent on the step size anymore but more subtly limited by the condition number of the spectral system matrix $A_{\tau\omega}^{+}$, a limitation that is remedied by regularization that makes uses of prior knowledge.

This is indeed the essential advantage of the present invention, that it allows for the incorporation of prior knowledge about the system and signal of interest. In particular, the invention may explicitly make use of the band-limited nature of many signals. For instance, the signal behind a photosensor sensitivity spectrum, e.g., a red color filter, on an RGB camera is bound within a range of about 100 nm. Similarly, each position of a dispersion-based hyperspectral camera will be limited in spectral content. Or, if the illumination source is known, e.g. a laser or light emitting diode, the source's original bandwidth can be used as prior knowledge for providing the spectral system matrix $A_{\tau\omega}^{+}$. This information is encoded in $A_{\tau\omega}^{+}$ by the simple fact that it only contains entries corresponding to possible frequencies which greatly limits the reconstruction set, whereas the Fourier transform is a general formula that is ignorant to the spectral content of its input. In this way the prior knowledge is represented by the formulation of the model itself. The flexibility in choosing the reconstruction set also transfers to the number and position of delays where the interference has to be recorded. Furthermore, the acquisition of the same signal through multiple filters essentially multiplies the number of measurement points and improves the condition of the reconstruction problem.

Probabilistic reconstruction framework

Quantifying a probability of the spectrally resolved image data ($S_\omega$)

In addition to the above global prior knowledge restrictions on the measurement model $A_{\tau\omega}^{+}$, information about properties of the signal can also be incorporated. Priors on the smoothness of the spectrum can directly deduced from the theory of Fourier transform spectroscopy, meaning that the spectrum is expected to be correlated on a scale inversely proportional to the delay range T. These priors restrict the solution space and remedy a potentially numerically unstable solution of the inverse problem in the case of a too high condition number of the model. They can be incorporated as a regularization term in the linear inverse problem. A more general treatment (that contains this regularization as a special case) is possible by treating the measurement and reconstruction probabilistically as

$$p(S|F) \propto p(F|S)p(S)$$

meaning the conditional probability of a certain spectrum $S$ given a measured intensity $F$ is proportional to the product of the likelihood of the measurement given the spectrum and the prior probability of the spectrum.

The estimate and uncertainty for the spectrum is then given by the maximum of this posterior distribution and its covariance. This is a consistent formalism that yields not only a solution but also "error bars" to quantify the strength of belief in that solution, while using no ad-hoc mathematical constructs to restrict the solution but only generally known characteristics of the spectrum encoded in the prior probability distribution and likelihood. More precisely, those are the measurement noise and other uncertainties about model parameters in the likelihood covariance and smoothness and structural properties of the spectrum encoded in the prior covariance.

Finally, the posterior distribution can be evaluated after each measurement step and used as a prior for the next one where the current estimate can inform the subsequent measurement strategy. For example, one can chose a certain delay where the expected gain in information is the highest. This approach of quantifying belief/errors and using it to measure efficiently is absent in the reconstructive measurement devices shown in the prior art. A preferable choice for the functional form of the likelihood and prior is a normal distribution. In this case the posterior is also normally distributed with mean and variance

$$\hat{S}(\omega) = \Sigma_{S,posterior} A^{\mathsf{T}} \Sigma_F^{-1} F(\tau)$$

$$\Sigma_{S,posterior} = (\Sigma_F^{-1} + A^{\mathsf{T}} \Sigma_S^{-1} A)^{-1}$$

with $\Sigma_{S/F}$ being the prior and likelihood covariances and $A$ the forward model. This can be computed in closed form, meaning no time-consuming iterative algorithm is necessary. Also, as the posterior variance is independent of the measurements values in this case, the most informative measurement positions can be chosen beforehand.

Probabilistic reconstruction of $S(\omega)$ from 10 measurements with an LC cell as the birefringent element. The delays at which to measure where determined by optimizing $U$ using an evolutionary algorithm. The number of resolvable spectral bands (determined by the maximum delay inducible by the LC cell) is 25.

Information gain and adaptive sampling

Another property of probability distributions that can be leveraged in this context is (differential) entropy H(p). This measures the amount of uncertainty encoded in the distribution. A good experimental strategy would be to take the measurements that reduce uncertainty the most. This difference in uncertainty between before and after the measurement is

$$\text{information gain} = H(\text{prior}) - H(\text{posterior}) = H(p(S)) - H(p(S|F))$$

For jointly Gaussian prior and likelihood this can be computed as

$$\text{information gain} = \frac{1}{2}(\log \det(A\Sigma_S A^{\mathsf{T}} + \Sigma_F) - \log \det(\Sigma_F))$$

This information gain is a function of the delay positions included in $A$, which means that for a given number of measurements the delays may be chosen that maximize the information gain.

Further details of the probabilistic reconstruction framework are described below.

Imaging configuration embodiments

Embodiments of the invention have been described above with reference to the use of at least one tunable birefringent element 11 with collimated or near-collimated light. Such conditions are met e.g. in collimated illumination sources (in which case the angle θ would also be constant) or sources that are far away from the at least one tunable birefringent element 11. Practical imaging configurations are illustrated in Figures 2 to 5 and described in the following.

With the described embodiments, the sensor elements of the photosensor 21 may be organized by constituting one macro-pixel by pixel arrays as shown in Figure 6. According to Figure 6A, for a mono polarization camera, a macro-pixel consists of 2 × 2 sensor elements 23 with polarizers shifted by 45 degrees. According to Figure 6B, a camera with a conventional RGB Bayer filter is subdivided to incorporate polarization filters for each color, resulting in 4 × 4 macro-pixels 24 (with one R macro-pixel 24, one B macro-pixel 24 and two G macro-pixels 24).

Use for near-collimated light with coherent laser sources

According to Figure 2, a collimated input light field from a coherent laser source (not shown) is passed through a voltage controlled liquid crystal (LC) cell 12 (or any tunable birefringet element) onto a photosensor device 20 comprising a polarization camera. One spatial position is covered by a macropixel 24 (see Figures 1, 6) consisting of either 4 pixels with different polarization or, using an RGB polarization camera, of 16 individual pixels with all possible combinations of color and polarization filter. The embodiment of Figure 2 may be used for e. g., determining a spatiospectral intensity of a collimated, polarized (and coherent) light source, i.e. a laser.

The delays to be selected for each frequency component at each voltage setting of the LC cell 12 can be calibrated beforehand using a white light source with a monochromator or a collection of monochromatic sources. This is because of dispersion in the LC cell 12 for which the induced delay is $\tau(\omega) = n(\omega)\tau_0$. The function $n(\omega)$ can be fitted to the Sellmeier equation with enough sample points. Apart from this dispersion term all rays experience the same delay as the light is collimated and goes through the LC cell 12 at the same angle and therefore with the same physical path length.

The achievable frequency resolution is given in the spectral domain by the bandwidth of a employed filter and in the temporal domain by the range of recorded delays. Therefore, the RGB filters already give certain frequency resolution which would be redundantly sampled by the delay induced by the LC cell 12. To increase the resolution above the one given by the maximum delay inducable by the LC cell 12, another birefringent element 13 is employed before or after the LC cell 12 in form of a birefringent crystal (made of e.g., calcite, BBO, quartz, mylar, etc.). The dimension of this crystal (in particular thickness along light path) is selected such that the delay between ordinary and extraordinary rays correspond exactly to the inverse of the spectral width of the color filters. With the optical axes of crystal 13 and LC cell 12 aligned, this starts the measurement outside of the range of redundant delays.

The autocorrelation is then the interference of the ordinary and extraordinary polarization components of the input light field 1 (laser light), corresponding to the principal axes of the LC cell 12. This interference is measured at each spatial position, for each color filter, on the polarization pixel that is a linear superposition of equal amounts of both polarization components. For example, with an LC cell 12 with principal axes oriented 0° and 90° relative to a surface of a support carrying the optical imaging apparatus, the interference would be measured in the 45° polarization pixel.

From the information in the rest of the polarization pixels, the Jones vector (a complete representation of the polarization state of light) of the laser light can be calculated.

A major advantage of this embodiment of the invention embodiment is its small footprint, being free of moving parts and achievability with low-cost components. Also one is not tied to one rigidly determined physical implementation of this setup. As mentioned earlier, the RGB camera can be swapped for a greyscale polarization camera and a different set of filters can be used. The polarization camera can also be used inside existing hyperspectral imager designs, e.g. those based on micro-lens arrays and dispersive elements. In this case the local effective bandwidth determines the delay range. Last, the LC cell 12 can be replaced for any tunable birefringent element.

In the probabilistic reconstruction framework the spectrum and its covariance is then reconstructed assuming a jointly gaussian likelihood and prior as

$$\hat{S}(\omega) = \Sigma_{S,posterior} A^\top \Sigma_F^{-1} F(\tau)$$

$$\Sigma_{S,posterior} = (\Sigma_F^{-1} + A^\top \Sigma_S^{-1} A)^{-1}$$

with $\Sigma_{S/F}$ being the prior and likelihood covariances and $A$ the forward model (system matrix).

Then it can be shown that to maximize the information content of the posterior distribution, one has to maximize the quantity

$$\text{information gain} = \frac{1}{2}(\log\det(A\Sigma_S A^\top + \Sigma_F) - \log\det(\Sigma_F))$$

by choosing which delay positions to include in $A$, meaning where to measure. Because the information gain is only dependent on the covariance of a characteristic spectrum and the measurement covariance of a certain implementation of the optical imaging apparatus, this optimization can be calculated once in advance of any measurements using a number of common optimization algorithms. An example for such an optimized reconstruction is shown in Figure 7.

With further details, the spectral encoding is provided with the embodiment of Figure 2 as follows. The LC cell 12 induces a voltage-dependent delay between two orthogonal polarization components of the laser source. This delay is the same at each spatial position. An additional fixed delay is induced by the offset birefringent element 13 with optic axis aligned to the optic axis of the LC cell 12. The amount of fixed delay is determined by the inverse of the frequency resolution of the employed spectral filters of the camera. Both polarization components interfere by passing through the polarization filters 22 on the camera pixels (e.g. if the delay is induced between the 0° and 90° component, the desired interference would be produced on the 45° pixel, see Figure 6). This results in a delay-dependent intensity on this pixel. The sum of two orthogonal polarization pixels gives the total intensity of the unmodulated light source and can be used for normalization.

This interference is recorded in a number of frequency channels, either using an RGB camera (see Figure 6B) or any hyperspectral camera device that uses a polarization camera for acquisition. This measurement is repeated for a desired number of delays resulting in a set of light field sensor data (sensed intensities $F(r, \tau)$).

For retrieval of spectral information the measured intensities are represented by the linear model $F_\tau = A_{\tau\omega}S_\omega$ (see Eq. (4). A Gaussian likelihood is assumed for the measurement with covariance $\Sigma_F$. Further, a Gaussian prior probability is assumed for the spectrum $\hat{S}_\omega$ with covariance $\Sigma_S$. This results in a Gaussian posterior distribution of the spectrum given the measured intensities. The estimated spectrum $\hat{S}_\omega$ is then the mean of this distribution and the uncertainty is given by the posterior covariance. They can be calculated like so:

$$\hat{S}_\omega = \Sigma_{S,posterior} A^\intercal \Sigma_F^{-1} F_\tau$$

$$\Sigma_{S,posterior} = (\Sigma_F^{-1} + A^\intercal \Sigma_S^{-1} A)^{-1}$$

Finally, the number and magnitudes of the delays at which we record the autocorrelations can be optimized. This is done by maximizing the information content of the posterior distribution which can be represented by the quantity

$$U = \log \det(\Sigma_{S,posterior})$$

This can be done in advance of the measurements, by maximizing $U$ with regard to the delays included in $A$ using a number of common iterative optimization algorithms.

Use in imaging systems with focus on incoherent light

A second use case concerns increasing the spectral resolution of imaging setups in the contexts of microscopy, photo, video and hyperspectral imaging. Here, a first lens 41 of imaging optics 40 collects light from a scene 3 and maps it onto the image plane of the photosensor device 20. Here, in particular two use cases can be distinguished:

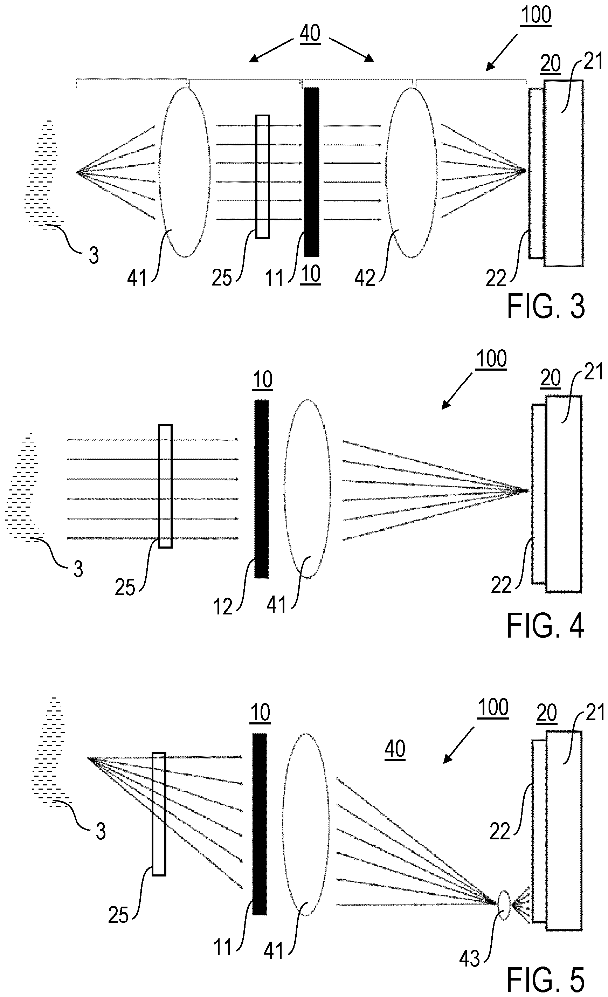

Firstly, a system with large numerical aperture, such as microscopes or macro-imaging, will cover light originating from a large range of angles. Rays originating from an object in the focal plane of the first imaging lens 41 will be collimated, as shown in Figure 3.

In contrast, in many use cases the aperture of the optical imaging apparatus 100 may be small compared to the image distance. Objects are often places meters or more away from the optical imaging apparatus 100, whose aperture is on the order of centimeters. In this scenario, the position in the image plane is directly linked to a small angular range with respect to the second imaging lens 42 from which the collected light originates, as shown in Figure 4.

With this embodiment, the delay experienced between light rays of orthogonal polarization is determined by the different distance s- and p-polarized light travels within the birefringent material 11. This can be directly related to the angle θ, defined as the angle of incoming light with respect to the axis of birefringence, as discussed above. Recalling Eq.2, the delay range then depends on

$$\tau(\theta) \propto (n(\theta) - n_0)/\cos(\theta)$$

This means that if an object extends over a certain range within the image plane of the photosensor device 20, or moves with respect to the image plane, either due to its own motion or due to camera movements, it will pass through regions representing different collection angles. This represents a sweep through delays, according to Eq.2.

Thus, spectral resolution enhancement can be obtained in the following configurations or combinations thereof: If an object extends over an angular region or, for fungible objects, if there exist several instances of the same object, one may combine data from all of these for analysis. A simple example would be a wall painted in a certain color; a single image of the wall will contain cases of the paint's reflection passing at different angles through the birefringent medium. Different techniques can be used to identify multiple instances of the same object, e.g. RGB matching in the channels of a polarization camera free of interference.

If the object is moving with respect to the imaging plane of the photosensor device 20, either due to intrinsic motion or due to the object being moved. Examples would be a car moving through the field of view or a substrate being moved through the field of view of a microscope. In the first case, object detection codes would be most suitable to register the instances of the car moving in time through the frame. In the latter case one could also rely on existent movement data from e.g. a motor moving the substrate.

If the object is static but moving with respect to the camera plane due to movement/rotation of the camera, the information about delay changes can directly be retrieved from gyroscopic data of the camera's position; high-precision MEMS gyroscopes which are available in many modern smartphone, tablet computers or high-end cameras.

With further details, the embodiment of Figure 3 may be used in imaging systems, where the light is not collimated, rays originating from an object (scene 3) are collected by the first imaging lens 41 (or a system of lenses) and imaged onto the camera sensor of the photosensor device 20 with the second imaging lens 42 (or a system of lenses). If the distance between scene 3 and first lens 41 is of similiar magnitude or smaller than the lens diameter, the system has large numerical aperture (e.g. a microscope).

In this case, object rays from one position would pass the tunable LC cell 12 (or a birefringent element) at different angles resulting in different delays. To remedy that, a 4*f*-system is provided, wherein the distance of the first and second imaging lenses 41, 42 is the sum of their focal lengths. Rays from an object in the focal plane of the first imaging lens 41 will be collimated. the second imaging lens 42 will refocus the light on the camera sensor of the photosensor device 20 in its focal plane if the distance between the lenses is the sum of their focal lengths. Then, the delay can be induced in the collimated light in between the imaging lenses 41, 42.

A polarizing element 25 is arranged in front of the LC cell 12 (with the polarizer axis oriented at 45° relative to the optic axis of the LC cell 12). The photosensor device 20 comprises a polarization camera with a polarizing element 22 and with spectral filters as schematically illustrated in Figure 6B.

The spectral encoding is provided as in the embodiment of Figure 2, as the light between the lenses is collimated. One addition is the polarizing element 25 in front of the LC cell 12 to produce polarized light with equal polarization components in the extra-/ordinary axes of the LC cell 12, as the collected light is generally unpolarized. Accordingly, also the retrieval of spectral information works as in the embodiment of Figure 2.

The embodiment of Figure 4 may be used in imaging systems with incoherent light and small numerical aperture. In particular, in contrast to the previous embodiment the image distance is large compared to the diameter of the imaging lens 41, so that the system has a small numerical aperture. In this case, rays originating from a position on the object (scene 3) that reach the lens aperture can be assumed to be collimated. Also each bundle of rays from one object point has a unique angle of incidence (AOI) on the first imaging lens 41. Because the delay induced by a birefringent element 11 is dependent on the light AOI, this produces a map of position in object plane (and therefore also position in image) to delay, which can be exploited for spectral encoding. With this embodiment, a static birefringent element 11 (with the polarizer axis of the polarizing element 25 oriented at 45° relative to the optic axis of the birefringent element 11) can be used.

For spectral encoding, the delay as a function of AOI (relative to surface normal) is

$$\tau(\theta) \propto (n(\theta) - n_o)/\cos(\theta) \text{ (see Eq. 2)}$$

It can be calibrated which pixel on the camera image sees which AOI and therefore delay. Therefore, imaging the same object at different positions in the image represents an autocorrelation measurement at different delays.

For retrieval of spectral information, there exist several approaches to compile autocorrelation data from this spectral encoding. Once compiled, the retrieval works the same as in the previous embodiments.

If a homogeneous object extends over an angular region (e.g. a painted wall), one acquired image already contains light from the object autocorrelated at different delays. These data can be combined for analysis. The same approach holds for multiple instances of the same object at different positions in the image.

If an object is moving relative to the camera plane, image registration algorithms can be used to align the object instances in the acquired images. This yields a stack of autocorrelation images of the object at different delays.

If the object is static but the camera is moving, images can be aligned by using gyroscopic data from the camera device (such are available in a number of consumer cameras and many modern smartphones).

Use of the optical imaging apparatus without polarization camera

As outlined above, the use of polarization sensor is preferred due to the ability to re-calibrate the baseline of the interfering rays. In the case of quasi-constant illumination or in case illumination can be re-calibrated using a second camera, one may also use two polarizers with the birefringent medium stacked inbetween. In this setup, no polarimetric information is obtained and one is sensitive to changes of illumination in time. However, for some applications that require less spectral enhancement, this configuration might be preferable, e.g. to use the technique in a smartphone.

Use of the optical imaging apparatus with light-field imaging

The techniques outlined so far have been limited to objects that are either very close (e.g. using a microscope) or those where the ratio of aperture $d$ to object distance $l_{obj}$ is $l_{obj}/d \ll 1$. In the latter approximation all rays entering the optical imaging apparatus - and passing the birefringent element in front - can be assumed to pass at approximately the same angle. Similarly, for objects very close a lens will collimate all light coming from within the focal plane.

In the case between though, each position in the image plane represents a superposition of light that entered the imaging system at different angles. This means that the delay and hence interference will be a sum. This smears out the interference, reducing spectral resolution and requiring different spectral resolution. The inventors propose to remedy this effect by including a measurement of the angle of incidence. This can be achieved using plenoptic cameras, often referred to as light field cameras. A plenoptic camera essentially images an object by dividing the aperture of the original lens into a multitude of smaller sublenses (microlenses) 43, as schematically illustrated in Figure 5.

If the sublenses 43 fulfill the criterion $l_{obj}/d_{sublens} \ll 1$, then the inventive method can still be applied. Indeed, this method then acts as a snapshot hyperspectral imager, as each sublens images the source at different angles and thus, delays. It should be noted though, that this type of setup presents its own trade-offs regarding spectral and spatial resolution.

With further details, light-field imaging can be used in the case that the object to lens distance is larger than the focal length but the numerical aperture is not small enough, so that neither the embodiment of Figure 3 nor the embodiment of Figure 4 are applicable. In this case, as shown in Figure 5, rays from one object position in scene 3 pass a polarizing element 25 and the birefringent element 11 (arranged before or after the imaging lens 41) at different angles. One can separate the light from one object point by AOI using the plenoptic camera. In this case, a static birefringent element 11 may be used. The plenoptic camera is formed by a plurality of sublenses 43 arranged in a focal plane of the first imaging lens 41 (one of the sublenses 43 is shown in Figure 5 only).

For spectral encoding, a delay is induced by the birefringent element 11. Each object position emits rays that pass element and length at a range of different angles. The microlens array of sublenses 43 is placed in the image plane followed by the photosensor device 20 with a polarizing photosensor in the focal plane of the microlenses 43. The resulting image is an array of subimages for each sublens. These subimages correspond to one object position and each pixel on these subimages corresponds to one ray direction. Because ray direction encodes delay, one subimage contains autocorrelation samples from the same object position measured at different delays. With this embodiment, the retrieval of spectral information works as in the previous embodiments.

Resolution enhancement of diffraction based spectrometers

The most common implementation of optical spectrometers uses a diffractive element like a grating or prism to physically separate the frequency components of incoming (collimated) light along one spatial dimension. The separated colors are then measured by a line of photodetector pixels. Thus, each pixel sees a bandpass-filtered version of the light signal, just like a camera pixel with RGB filters. The interference signal is then generated by a tunable birefringent element (e.g., LC cell) and a subsequent polarizer, oriented 45° relative to the fast axis, in front of the entrance of the spectrometer. From the collection of interference signals at each spectrometer pixel, the spectrum can then be reconstructed. With the inventive concept, the resolution of an optical spectrometer can be enhanced using at least one tunable birefringent elements.

Essentially, this embodiment is a special, single-pixel case of the embodiment of Figure 2, where the polarizing element and the spectrometer represent the polarization camera with spectral filters. This is because a diffractive element in the spectrometer separates the frequency components of the light along one spatial dimension. The separated colors are then measured by a line of photodetector pixels. Thus, each pixel sees a bandpass-filtered version of the light signal that enters the spectrometer at a single position. The retrieval works of spectral information is the same as for the previous embodiments.

Temporal signal intensity variation

Another issue with retrieval of spectral information is that the signal intensity may not only vary as a function of delay, but also of time. This could be e.g. due to drifts in the illumination source's brightness. To remedy this issue, a pixel-level polarization camera may be used that combines four polarization filters into a single $2 \times 2$ macro-pixel 24 (see Figure 1). The total intensity can then be read out from the sum of intensities on two pixels with orthogonal polarization filters. This drift in time can then be inferred from a substantial change in the posterior distribution which would be expected to only narrow (decrease in variance) for a steady signal.

<u>Detailed explanation of the application of Bayesian inference for quantifying a probability of the spectrally resolved image data</u>

Features of embodiments of the invention for quantifying a probability of the spectrally resolved image data are described in the following with particular reference to the data processing and mathematical background thereof.

Exemplary reference is made to embodiments, wherein a series of updates of the mean estimate and covariance are provided for iteratively improving the reconstruction result. It is emphasized that the invention is not restricted to these multiple updates embodiment, but rather can be implemented with a single update only, e.g., if a particularly fast reconstruction is intended, the result of the single update reconstruction is sufficient and/or the prior match the result quite well.

The steps of quantifying a probability of the spectrally resolved image data are applied with each pixel of a photosensor device of the optical imaging apparatus.

Mathematical formulation

In traditional FTS, the measured interferogram $I(\tau)$ for a given optical path difference $\tau$ is given by:

$$I(\tau) = \int_{-\infty}^{\infty} S(\omega)[1 + \cos(\omega\tau)]d\omega \qquad (7)$$

where $S(\omega)$ is the spectrum to be estimated. The spectrum can be derived by applying the Fourier transform to the interferogram:

$$S(\omega) = \mathcal{F}\{I(\tau) - I(0)\} \qquad (8)$$

This conventional approach imposes limitations on the spectral range and resolution:

$$\Delta\omega_{max} = \frac{\pi}{\Delta\tau}, \delta\omega = \frac{2\pi}{\tau_{max}} \qquad (9)$$

where $\Delta\tau$ is the delay step size and $\tau_{max}$ is the maximum delay. For applying the Fourier transform $I(\tau)$, has to be sampled in regular intervals with a fixed step size.

The application of BAS is a probabilistic model that relates the measured interferogram to the underlying spectrum. The measured signal for a given delay $\tau$ is expressed as:

$$F(\tau) = 2 \int_{-\infty}^{\infty} S(\omega)[1 + \cos(\omega\tau)]Q(\omega)d\omega + n(\tau) \qquad (10)$$

where $S(\omega)$ is the spectrum to be estimated, $Q(\omega)$ represents the spectral efficiency of the detector, and $n(\tau)$ is additive noise. Consideration of the additive noise is an optional feature of the inventive reconstruction. Depending on the application the n-term can be neglected.

This formulation generalizes the traditional FTS equation by explicitly including the detector efficiency $Q(\omega)$ and the noise term $n(\tau)$. This can be expressed as a linear system:

$$F = RS + n \qquad (11)$$

where $F$ is the vector of measured intensities (measured sensor data), $S$ is the discretized spectrum, $R$ is the spectral system matrix with elements $R_{ij} = [1 + \cos(\omega_i\tau_j)]Q(\omega_i)$, and $n$ is the noise vector.

Bayesian Inference Framework

BAS employs a Bayesian inference framework to estimate the spectrum. The key idea is to treat the spectrum $S(\omega)$ as a random variable and update assumptions (beliefs) about it as measurements are collected. This is formalized using Bayes' theorem:

$$p(S|F) = \frac{p(F|S)p(S)}{p(F)} \qquad (12)$$

where $p(S|F)$ is the posterior probability of the spectrum given the measurements, $p(F|S)$ is the likelihood of the measurements given the spectrum, $p(S)$ is the prior probability of the spectrum, and $p(F)$ is the evidence (a normalization factor that is not needed to infer anything about $S$).

Practically, the spectrum data reconstruction method is directed on calculating the moments of this distribution, specifically the mean estimate $\mu_S^{posterior}$, which represents the most probable spectrum is, and the covariance $\Sigma_S^{posterior}$, which represents the uncertainty and how this uncertainty correlates between different spectral channels.

Updating scheme

To derive practical update equations, preferably Gaussian assumptions for both the prior and likelihood distributions may be made. It is assumed that the prior distribution of the spectrum is Gaussian with mean $\mu_S^{prior}$ and covariance $\Sigma_S^{prior}$:

$$p(S) = \mathcal{N}(\mu_S^{\text{prior}}, \Sigma_S^{\text{prior}}) \tag{13}$$

Similarly, it is assumed that the likelihood is Gaussian, with the measurements $F$ normally distributed around $RS$ (our model's prediction) with covariance $\Sigma_F$:

$$p(F|S) = \mathcal{N}(RS, \Sigma_F) \tag{14}$$

The inventors employ a key property of Gaussian distributions according to which the product of two Gaussians is also Gaussian. Given that both the prior and likelihood are Gaussian, the posterior distribution $p(S|F)$ will also be Gaussian. This property can be leveraged to derive update equations, as follows.

Generally, the product of two Gaussian distributions $\mathcal{N}(a, A)$ and $\mathcal{N}(b, B)$ is proportional to a new Gaussian $\mathcal{N}(c, C)$, where:

$$C^{-1} = A^{-1} + B^{-1} \tag{15}$$

$$c = C(A^{-1}a + B^{-1}b) \tag{16}$$

Applying this to the present embodiment of spectrum data reconstruction, $A^{-1}$ can be identified with $(\Sigma_S^{prior})^{-1}$, $B^{-1}$ with $R^T(\Sigma_F)^{-1}R$, $a$ with $\mu_S^{prior}$, and $b$ with $R^T(\Sigma_F)^{-1}F$. This leads directly to the update equations:

$$\Sigma_S^{\text{new}} = ((\Sigma_S^{\text{prior}})^{-1} + R^T(\Sigma_F)^{-1}R)^{-1} \tag{17}$$

$$\mu_S^{\text{new}} = \Sigma_S^{\text{new}}((\Sigma_S^{\text{prior}})^{-1}\mu_S^{\text{prior}} + R^T(\Sigma_F)^{-1}F) \tag{18}$$

These equations can be rearranged to the more familiar Kalman filter form:

$$\mu_S^{\text{new}} = \mu_S^{\text{prior}} + K(F - R\mu_S^{\text{prior}}) \tag{19}$$

$$\Sigma_S^{\text{new}} = (I - KR)\Sigma_S^{\text{prior}} \tag{20}$$

where $K$, known as the Kalman gain, is given by:

$$K = \Sigma_S^{\text{prior}}R^T(R\Sigma_S^{\text{prior}}R^T + \Sigma_F)^{-1} \tag{21}$$

These update equations provide a mechanism to optimally combine prior beliefs about the spectrum with new measurement information.

Note that this mathematical formulation does not require measurements at evenly spaced delays but allows arbitrary ones. The Kalman gain $K$ determines how much it should be trusted the new measurement versus the prior belief. When the measurement noise $\Sigma_F$ is large compared to the prior uncertainty $\Sigma_S^{prior}$, $K$ will be small, and it will be trusted the prior more. Conversely, when $\Sigma_F$ is small compared to $\Sigma_S^{prior}$, $K$ will be large, and it will be trusted the new measurement more. In this case the prior can be considered as uninformative, as the measurements dominate the estimate. In this limit $K \rightarrow R^{-1}$ and thus

$$\mu_S^{new} = R^{-1}F \tag{22}$$

Importantly, in the case of Nyquist sampling this is equivalent to the FFT solution used in FTS. This means the update equation for the mean can be rewritten as

$$\mu_S^{new} = \mu_S^{prior} + KR(\mu_S^{FFT} - \mu_S^{prior}) \tag{23}$$

This form allows for an informed estimate to be calculated from a regular FTS reconstruction with knowledge of only the measured delays (which are encoded in $R$) but not the intensity values $F$.

Further, it is noted, that the individual steps of the invention (in particular updates, information gain calculation, etc., see below) can also be implemented using distributions other than Gaussian distributions. In these cases, mean estimates and covariances may be numerically approximated (e.g., with methods like Markov Chain Monte Carlo (MCMC), Laplace approximation, variational inference, or approximate Bayesian computation).

Incorporation of prior knowledge

The Bayesian framework allows for natural incorporation of prior knowledge about the spectrum. This prior knowledge can come from physical constraints, e.g., spectral information on the source of the measuring light source and/or spectral information on the photosensor device, previous measurements, and/or theoretical models. It is encoded in the initial mean $\mu_S^{prior}$ and covariance $\Sigma_S^{prior}$. E.g., the prior covariance could encode correlations between spectral components which amount to a certain "smoothness" of the spectrum. The information encoded in the prior provides a form of regularization on the solution. This makes the spectral estimate more robust to noise, as it combines the information from the measurements with our prior knowledge about the spectrum's properties.

However, a rigorous framework may be preferred to ensure that prior information does not lead to biases that deteriorate performance. The challenge lies in selecting or averaging over a set of candidate priors (henceforth called prior models) in a way that optimizes the spectral reconstruction while avoiding overfitting.

The orthodox Bayesian approach would consider a continuous distribution over possible prior models and marginalize them:

$$p(S|F) = \int \ p(S|F, M)p(M|F)dM \tag{24}$$

where $S$ is the spectrum, $F$ is the data, and $M$ represents a prior model. However, this integral may be intractable to calculate analytically and computationally expensive to approximate using methods such as Markov Chain Monte Carlo (MCMC).

If applicable, to make the problem tractable, a discrete set of candidate prior models $\{M_1, M_2, ..., M_K\}$ is considered. While not strictly Bayesian, this approach is well motivated by practical considerations and computational feasibility. One might consider calculating $p(M_k|F)$, which, for a uniform prior over models, would be proportional to the evidence $p(F|M_k)$. However, in the jointly Gaussian and linear inference case of the invention, this approach could favor the most uninformative prior and potentially overfit to the data.

To mitigate overfitting, assessing prior models using LeaveOne-Out Cross-Validation (LOO-CV) as a measure of predictive accuracy may be employed in advantageous manner. The LOO-CV score for a given prior model $M_k$ is calculated as follows:

$$\text{LOO-CV}(M_k) = \frac{1}{n}\sum_{i=1}^{n} -\log\int \ p(F_i|S, M_k)p(S|F_{-i}, M_k)dS \tag{25}$$

where $F_i$ is the $i$-th data point, $F_{-i}$ represents all data points except the $i$-th, and we marginalize over the signal $S$. This integration over $Y$ is crucial as it accounts for the uncertainty in the signal estimation given the prior model and the data.

To weigh the prior models, using a softmax function with a temperature parameter is proposed:

$$w_k = \frac{\exp(-L_k/T)}{\sum_{j=1}^{K} \exp(-L_j/T)} \tag{26}$$

where $L_k$ is the LOO-CV score for prior model $M_k$, and $T$ is a temperature parameter. This approach, while not standard in Bayesian analysis, offers a flexible and intuitive way to balance between prior model selection and prior model averaging. As $T \to 0$, the weights approach a hard selection of the best-performing prior model, while higher values of $T$ lead to more uniform weighting across prior models.

The set of candidate prior models may be constructed from priors inferred from previously seen or measured spectra, as well as an uninformative prior to maintain the limiting case of traditional Fourier transform spectroscopy. This combination has the advantage that the method can leverage prior information when available while still performing robustly in novel scenarios.

Prior model averaging, a more orthodox Bayesian approach, can be performed as:

$$p(S|F) = \sum_{k=1}^{K} w_k p(S|F, M_k) \tag{27}$$

While prior model averaging can provide more robust predictions by incorporating uncertainty in model selection, it may not fully represent the continuous integral over "prior model space" that a true Bayesian approach would consider. The choice between averaging and selection may depend on the specific application and the diversity of the candidate prior model set.

In conclusion, the inventive framework provides an advantageous pragmatic approach to incorporating prior information in spectral reconstruction. By selecting and weighting a set of candidate prior models based on predictive accuracy, the strengths of Bayesian inference can be leveraged while mitigating the risks of overfitting and bias. This adaptive prior selection and averaging process ensures that the method can leverage prior information when it is beneficial while maintaining robustness against potentially biased or overly restrictive priors. It provides a data-driven mechanism to balance the influence of different prior models, allowing the method to adapt to the specific characteristics of each spectroscopic measurement scenario.

Information-Theoretic Sampling Optimization

A key advantage of BAS is its ability to optimize sampling strategies based on information theory. In traditional FTS, measurements are typically taken at uniform intervals determined by the Nyquist-Shannon sampling theorem. BAS, however, allows for non-uniform sampling by quantifying the information content of each potential measurement, as described in the following with reference to Figure 10.

The information gain from a new measurement may be quantified using the concept of differential entropy. For a multivariate Gaussian distribution, the differential entropy is given by:

$$H(X) = \frac{1}{2}\log((2\pi e)^n |\Sigma|) \tag{28}$$

where $n$ is the dimensionality of the distribution and $|_\Sigma|$ is the determinant of the covariance matrix.

The information gain from a new measurement is then defined as the reduction in entropy:

$$\text{Information Gain} = H(\text{prior}) - H(\text{posterior}) \tag{29}$$

This can be computed as:

$$\text{Information Gain} = \frac{1}{2}\left(\log(\det(S)) - \log(\det(\Sigma_F))\right) \tag{30}$$

where $S = R\Sigma_S R^T + \Sigma_F$ is the predicted measurement covariance.

This formulation allows for the selection of measurement delays that maximize information gain. The next measurement delay $\tau$ can be chosen by maximizing the information gain:

$$\tau_{\text{next}} = \underset{\tau}{argmax}\left(\log(\det(R_\tau \Sigma_S R_\tau^T + \Sigma_F)) - \log(\det(\Sigma_F))\right) \tag{31}$$

Advantageously, this adaptive sampling strategy can significantly reduce the number of required measurements for a given spectral resolution, especially when the spectrum contains localized features or when certain spectral regions are of particular interest.

Interestingly, under certain conditions (uniform prior uncertainty, uniform spectral efficiency, and isotropic measurement noise), the optimal sampling strategy according to this information-theoretic criterion recovers the uniform sampling of traditional FTS. Specifically, the maxima of highest information gain occur at multiples of $\pi/\omega_{max}$, which is exactly the Nyquist sampling rate. For bandlimited signals, the optimal sampling rate becomes $\pi/(\omega_U-\omega_L)$, consistent with bandpass sampling theory.

The BAS framework thus provides a unified treatment of sampling in FTS, encompassing both traditional uniform sampling and more sophisticated adaptive strategies. By explicitly quantifying the information content of each measurement, BAS opens up new possibilities for efficient spectral estimation, particularly in scenarios where measurement time or data storage is at a premium.

Practical embodiment: Enhancement of an optical imaging apparatus with Non-Adaptive Sampling

According to a preferred embodiment, the invention may implement Bayesian Autocorrelation Spectroscopy (BAS) as a post-processing enhancement to the measurement with the optical imaging apparatus, improving spectral reconstruction without hardware modifications of the optical imaging apparatus. The optical imaging apparatus 100 provides an interferometric autocorrelation measurement apparatus, including a measuring device 110 with a sensor device and a spectrum data reconstruction apparatus 120 according to an embodiment of the invention, as schematically shown in Figure 11. The measuring device 110 is included in the optical imaging apparatus 100, e.g. according to Figure 1, including in particular the imaging photosensor device, and having raw interferogram data export capability. The spectrum data reconstruction apparatus 120 is a computer unit running a BAS algorithm software implementation of the spectrum data reconstruction method according to an embodiment of the invention. The spectrum data reconstruction apparatus 120 may be integrated in control components of the measuring device 110, i.e., a software implementing the spectral data reconstruction may run in the measuring device 110.

An interferometric autocorrelation measurement method according to an embodiment of the invention comprises the steps of providing a measuring light field, interacting of the measuring light field with a sample to be investigated and measuring sensor data by an interferometric autocorrelation measurement of interferogram data with the measuring device 110 of the optical imaging apparatus 100.

The data collection of the measuring step comprises collecting interferogram data using standard uniform sampling (sampling with uniform delay steps), recording delay values for each data point and storing instrument parameters, like in particular spectral range, resolution, and detector efficiency curve. Subsequently, a data preprocessing is executed, including an import of raw interferogram data and delay values, applying standard FTS corrections (e.g., phase correction, baseline removal) and constructing a spectral system matrix R using delay values and detector efficiency.

For providing an initial prior estimate $\mu_S^{prior}$ and an initial prior covariance $\Sigma_S^{prior}$ of the spectrum data (step S1.0 in Figure 8 or step S2.1 in Figure 9)), a prior model construction is implemented as follows.

Candidate prior models are defined based on a database of relevant spectra of at least one comparable sample (expected to have similar spectral properties like the sample to be investigated), previously measured spectra of similar samples, known light source characteristics for absorption experiments, and/or general knowledge about spectral correlations. Furthermore, the prior model construction may include providing an uninformative prior for comparison and/or implementing a Leave-One-OutCross-Validation (LOO-CV) for prior model evaluation.

The subsequent spectral reconstruction may be executed according to one of the following options, including a sequential updating (option A, see Figure 1) or a one-step process using FFT reconstruction (option B, see Figure 9).

According to option A (sequential updating), $\mu_S^{prior}$ and $\Sigma_S^{prior}$ are initialized based on the chosen prior model (step S1.0 in Figure 8). Based on the priors, the updated estimates are calculated for each measurement point (steps S1.1 and S1.2 in Figure 8) based on equations (19) and (20) according to:

$$\text{Update } \mu_S^{\text{new}} = \mu_S^{\text{prior}} + K(F - R\mu_S^{\text{prior}})$$

$$\text{Update } \Sigma_S^{\text{new}} = (I - KR)\Sigma_S^{\text{prior}}$$

For the next iteration, the estimates of the first calculation are set according to $\mu_S^{\text{prior}} = \mu_S^{\text{new}}$ and $\Sigma_S^{\text{prior}} = \Sigma_S^{\text{new}}$

as the updated prior input for the next calculation (step S1.4 in Figure 8).

The updating iterations are terminated and final reconstruction is output based on a testing (evaluating) of a predefined stopping condition (comprising e.g., a predefined uncertainty threshold and/or a predefined maximum number of measurement or delay applied). If the stopping condition is fulfilled, a final BAS update is performed and a final spectral estimate with uncertainty bounds is generated and output.

According to option B (One-step process using FFT reconstruction), a standard Fourier transform is executed at first (step S2.0 in Figure 9) to obtain a Fourier estimate $\mu_S^{FFT}$ of the spectral data. Using the Fourier estimate and the priors (step S2.1 in Figure 9) and the spectral system matrix (step S2.2 in Figure 29), updated estimates of the spectral data are obtained (step S2.3 in Figure 9, see equation (17)) by

$$\text{calculating } \mu_S^{new} = \mu_S^{prior} + KR(\mu_S^{FFT} - \mu_S^{prior})$$

$$\text{and updating } \Sigma_S^{new} = (I - KR)\Sigma_S^{prior}$$

Prior model averaging is provided by calculating weights for each prior model based on LOO-CV scores and computing weighted average of spectral estimates from different prior models.

Finally, uncertainty is quantified by extracting uncertainty estimates from diagonal elements of $\Sigma_S^{new}$, and the final spectral estimate with uncertainty bounds are presented as output of the spectrum data reconstruction method.

Practical embodiment: Optical imaging apparatus with adaptive sampling

According to a further preferred embodiment, an optical imaging device is employed, which incorporates real-time adaptive sampling based on the BAS framework, wherein optimal delay values are dynamically selected to maximize information gain, as illustrated in Figure 10.

Again, the FTS system provides an interferometric autocorrelation measurement apparatus 100, including a measuring device 110 with a sensor device and a spectrum data reconstruction apparatus 120 according to an embodiment of the invention, as schematically shown in Figure 11. Pref-erably, the measuring device 110 is included in the optical imaging device 100 according to an embodiment of the invention, wherein the optical imaging device 100 may be adapted with a precision delay control. The photosensor device preferably may comprise a high-speed, low-noise detector camera. Furthermore, the measuring device 110 and/or the spectrum data reconstruction apparatus 120 includes a real-time control system for rapid data processing and decision making. The spectrum data reconstruction apparatus 120 is a computer unit running a BAS algorithm software implementation of the spectrum data reconstruction method according to the embodiment of the invention, including the adaptive sampling optimization.

Furthermore, as noted above, the interferometric autocorrelation measurement method according to an embodiment of the invention comprises the steps of providing a measuring light field, interacting of the measuring light field with a sample to be investigated and measuring sensor data by an interferometric autocorrelation measurement of interferogram data with the measuring device 110. However, in this case the sensor data are not measured with fixed delays, but with adaptively changed delays set as follows.

Firstly, a system initialization is implemented, including defining a spectral range of interest and initial spectral resolution target of interest. This may be done on the basis of prior knowledge on the sample and the measuring device, in particular a measuring light source and a photosensor device thereof. The spectral range of interest and the spectral resolution target of interest are related to the delay and interval of delay variation as described above.

Prior models ($\mu_S^{prior}$, $\Sigma_S^{prior}$) are initialized based on available information or uninformative prior, and an initial delay is set to zero (step 53.0 in Figure 10).

On the basis of the system initialization, an adaptive sampling and real-time processing loop is implemented as follows.

Firstly, information gain for potential delay values using current optimal estimate is calculated (step S3.1 in Figure 10) according to

$$\text{Information Gain} = \frac{1}{2}\left(\log(det(R_\tau \Sigma_S R_\tau^T + \Sigma_F)) - \log(det(\Sigma_F))\right) \qquad (32)$$

The delay value $\tau_{next}$ is selected, which provides maximizing the information gain. The delay in the measuring device 110 is adjusted to the selected delay $\tau_{next}$ and the measurement (step S3.2 in Figure 10) is acquired at the selected delay $\tau_{next}$.

On the basis of the current measurement, the spectral estimate and uncertainty are updated (step 53.3 in Figure 10) using the BAS equations for calculating the spectral data (step 53.4 in Figure 11) as mentioned above with reference to option A of the above embodiment. Furthermore, the spectral system matrix R is continuously updated based on actual delay values.

Subsequently, weights are recalculated for each prior model based on updated LOO-CV scores, and weighted average of spectral estimates are computed from different prior models. The updated weighted average is used for the next information gain calculation.

As noted above, the termination and final reconstruction is based on the predefined stopping condition (comprising e.g., a predefined uncertainty threshold and/or a predefined maximum number of measurement or delay applied).

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the subclaims independently of the features and claims to which they refer.

**Claims**

1. Optical imaging apparatus (100), being configured for receiving an input light field (1) and for creating spectrally and spatially resolved image data ($S_\omega$) of the input light field (1), said input light field (1) having an input light field spectrum and two different polarization components (1A, 1B), comprising

   - an autocorrelation device (10) being configured for receiving the input light field (1), controlling a delay between the polarization components (1A, 1B) of the input light field (1) and providing an autocorrelation light field (2) including a superposition of the polarization components (1A, 1B),
   - a photosensor device (20) having at least one polarizing element (21) and a photosensor (22) with a photosensor sensitivity spectrum and being configured for receiving the autocorrelation light field (2) and providing sensed spatially resolved light field sensor data ($F_\tau$), wherein the light field sensor data ($F_\tau$) include a superposition of the spectrally resolved image data ($S_\omega$) to be obtained and the light field sensor data ($F_\tau$) depend on said delay between the polarization components (1A, 1B) of the input light field (1), and
   - an image processor device (30) being coupled with the photosensor device (20) and being configured for calculating the spectrally resolved image data ($S_\omega$) based on the light field sensor data ($F_\tau$), **characterized in that**
   - the image processor device (30) is configured for calculating the spectrally resolved image data ($S_\omega$) by applying a regularized inversion to the light field sensor data ($F_\tau$), said inversion being constructed in dependency on prior information on at least one of the input light field (1), the spectrally resolved image data ($S_\omega$) and the optical imaging apparatus (100).

2. Optical imaging apparatus according to claim 1, wherein

   - the light field sensor data ($F_\tau$) are represented by multiplying a spectral system matrix ($A_{\tau\omega}$) with the spectrally resolved image data ($S_\omega$) according to $F_\tau = A_{\tau\omega} \cdot S_\omega$, and
   - the image processor device (30) is configured for calculating the spectrally resolved image data ($S_\omega$) by applying an inverted spectral system matrix ($A_{\tau\omega}^+$) according to $S_\omega = A_{\tau\omega}^+ \cdot F_\tau$, wherein said inverted spectral system matrix ($A_{\tau\omega}^+$) depends on said prior information on at least one of the input light field (1), e.g., the input light field spectrum, the spectrally resolved image data ($S_\omega$) and the optical imaging apparatus, e.g., the photosensor sensitivity spectrum and/or the delay.

3. Optical imaging apparatus according to one of the foregoing claims, wherein

   - the autocorrelation device (10) is configured for controlling the delay between the polarization components (1A, 1B) of the input light field (1) such that it is limited to at least one delay interval in which the autocorrelation light field (2) provides non-vanishing contributions to the light field sensor data ($F_\tau$), and
   - the image processor device (30) is configured for applying said regularized inversion to the light field sensor data ($F_\tau$), said inversion being constructed in dependency on the delay between the polarization components (1A, 1B) of the input light field (1).

4.   Optical imaging apparatus according to one of the foregoing claims,

   - the autocorrelation device (10) comprises at least one tunable birefringent element (11), comprising at least one of
   - an arrangement of movable birefringent material with varying thickness, e.g., at least two wedge elements, being movable with respect to each other and a Wollaston prism, wherein a delay control device is arranged for controlling the delay by moving the birefringent material,
   - at least one pivotable birefringent element (11) having a variable angle of incidence, wherein the autocorrelation device (10) is adapted for varying the delay by pivoting the birefringent material, and
   - at least one liquid crystal element, wherein a delay control device is arranged for controlling the delay by controlling a voltage applied to the least one liquid crystal element.

5.   Optical imaging apparatus according to claim 4, wherein

   - the at least one tunable birefringent element (11) comprises said at least one pivotable birefringent element (11) having the variable angle of incidence,
   - the at least one pivotable birefringent element (11) is fixedly connected with the photosensor device (20), and
   - the at least one pivotable birefringent element (11) and the photosensor device (20) are commonly pivotable relative to the input light field (1) for controlling the delay.

6.   Optical imaging apparatus according to one of the foregoing claims, wherein

   - the photosensor sensitivity spectrum of the photosensor (22) comprises at least one sensitivity band, e. g., a red sensitivity band, a green sensitivity band and/or a blue sensitivity band, and
   - the autocorrelation device (10) further comprises at least one offset birefringent element (13) being dimensioned such that the delay between the polarization components (1A, 1B) induced by the offset birefringent element (13) is equal to the inverse of the spectral width of the at least one sensitivity band.

7.   Optical imaging apparatus according to one of the foregoing claims, wherein

   - the autocorrelation device (10) is exposed for directly receiving a field of collimated light rays from a coherent light source as the input light field (1).

8.   Optical imaging apparatus according to one of claims 1 to 6, wherein

   - a first imaging lens is arranged in front of the autocorrelation device (10) for receiving the input light field (1) at high numerical aperture and directing the input light field (1) as a field of collimated light rays onto the autocorrelation device (10), and
   - a second imaging lens is arranged between the autocorrelation device (10) and the photosensor device (20) for imaging the autocorrelation light field (2) on the photosensor device (20).

9.   Optical imaging apparatus according to one of claims 1 to 6, wherein

   - the autocorrelation device (10) is exposed for directly receiving a field of near-collimated light rays, in particular originating from a far object, and
   - a first imaging lens is arranged between the autocorrelation device (10) and the photosensor device (20) for imaging the autocorrelation light field (2) on the photosensor device (20).

10.  Optical imaging apparatus according to one of the claims 1 to 6, further comprising

   - an array of micro-lenses being arranged in front of the photosensor device (20), wherein
   - the autocorrelation device (10) is exposed for directly receiving a field of light rays, in particular originating from a far object,
   - a first imaging lens is arranged between the autocorrelation device (10) and the photosensor device (20) for imaging the autocorrelation light field (2) on the array of micro-lenses, and
   - the array of micro-lenses is arranged for light field imaging the autocorrelation light field (2) onto the photosensor device (20).

11. Optical imaging apparatus according to one of the foregoing claims, comprising a mobile camera device, e.g. of a mobile phone, including a camera unit, wherein

- the photosensor device (20) is provided by the camera unit coupled with the at least one polarizing element (21),
- the autocorrelation device (10) is fixedly arranged in front of the camera unit, and
- the mobile camera device is configured for varying the delay between the polarization components (1A, 1B) of the input light field (1) by at least one of turning the mobile camera device relative to a scene to be imaged, moving a scene to be imaged relative to the camera device and simultaneously collecting the input light field (1) from different spectrally equal portions of a scene to be imaged having different angles relative to the camera device.

12. Optical imaging apparatus according to one of the foregoing claims, wherein

- the image processor device (30) is configured for quantifying a probability of the spectrally resolved image data $(S_\omega)$.

13. Spectral imaging method for creating spectrally and spatially resolved image data $(S_\omega)$ of an input light field (1) having an input light field spectrum and two different polarization components (1A, 1B), comprising the steps of

- receiving the input light field (1), controlling a delay between the polarization components (1A, 1B) of the input light field (1) and providing an autocorrelation light field (2) including a superposition of the polarization components (1A, 1B),
- receiving the autocorrelation light field (2) with a photosensor device (20) having at least one polarizing element (21) and providing sensed spatially resolved light field sensor data $(F_\tau)$, wherein the light field sensor data $(F_\tau)$ include a superposition of the spectrally resolved image data $(S_\omega)$ to be obtained and the light field sensor data $(F_\tau)$ depend on said delay between the polarization components (1A, 1B) of the input light field (1), and
- calculating the spectrally resolved image data $(S_\omega)$ based on the light field sensor data $(F_\tau)$ with an image processor device (30) coupled with the photosensor device (20),
**characterized in that**
- the spectrally resolved image data $(S_\omega)$ are calculated by applying a regularized inversion to the light field sensor data $(F_\tau)$, said inversion being constructed in dependency on prior information on at least one of the input light field (1), the spectrally resolved image data $(S_\omega)$ and said steps of receiving the input light field (1), controlling the delay between the polarization components (1A, 1B) of the input light field (1), providing an autocorrelation light field (2), receiving the autocorrelation light field (2) and/or providing the spatially resolved light field sensor data $(F_\tau)$.

14. Spectral imaging method according to claim 13, wherein

- the light field sensor data $(F_\tau)$ are represented by multiplying a spectral system matrix $(A_{\tau\omega})$ with the spectrally resolved image data $(S_\omega)$ according to $F_\tau = A_{\tau\omega} \cdot S_\omega$, and

- the spectrally resolved image data $(S_\omega)$ are calculated by applying an inverted spectral system matrix ( $A_{\tau\omega}^+$ )

according to $S_\omega = A_{\tau\omega}^+ \cdot F_\tau$ , wherein said inverted spectral system matrix ( $A_{\tau\omega}^+$ ) depends on said prior information on at least one of the input light field (1), e.g., the input light field spectrum, the spectrally resolved image data $(S_\omega)$ and said steps of receiving the input light field (1), controlling the delay between the polarization components (1A, 1B) of the input light field (1), providing an autocorrelation light field (2), receiving the autocorrelation light field (2) and/or providing the spatially resolved light field sensor data $(F_\tau)$.

15. Spectral imaging method according to one of the claims 13 to 14, wherein

- the delay between the polarization components (1A, 1B) of the input light field (1) is controlled such that it is limited to at least one delay interval in which the autocorrelation light field (2) provides non-vanishing contributions to the light field sensor data $(F_\tau)$, and
- the image processor device (30) is configured for applying said regularized inversion to the light field sensor data $(F_\tau)$, said inversion being constructed in dependency on the delay between the polarization components (1A, 1B) of the input light field (1).

16. Spectral imaging method according to one of the claims 13 to 15,

- the autocorrelation device (10) comprises at least one tunable birefringent element (11) comprising at least one of

- an arrangement of movable birefringent material with varying thickness, e.g., at least two wedge elements, being movable with respect to each other and a Wollaston prism, wherein a delay control device is arranged for controlling the delay by moving the birefringent material,

- at least one pivotable birefringent element (11) having a variable angle of incidence, wherein the autocorrelation device (10) is adapted for varying the delay by pivoting the birefringent material, and

- at least one liquid crystal element, wherein a delay control device is arranged for controlling the delay by controlling a voltage applied to the least one liquid crystal element.

17. Spectral imaging method according to claim 16, wherein

- the at least one tunable birefringent element (11) comprises said at least one pivotable birefringent element (11) having the variable angle of incidence,

- the at least one pivotable birefringent element (11) is fixedly connected with the photosensor device (20), and

- the delay is controlled by commonly pivoting the at least one pivotable birefringent element (11) and the photosensor device (20).

18. Spectral imaging method according to one of the claims 13 to 17, wherein

- the photosensor sensitivity spectrum of the photosensor (22) comprises at least one sensitivity band, e. g., a red sensitivity band, a green sensitivity band and/or a blue sensitivity band, and

- the delay between the polarization components (1A, 1B) is controlled to be equal to the inverse of the spectral width of the at least one sensitivity band.

19. Spectral imaging method according to one of the claims 13 to 18, comprising one of the features

- the input light field (1) comprises a field of collimated light rays from a coherent light source,

- the input light field (1) is received with a high numerical aperture and converted with a first imaging lens into a field of collimated light rays before controlling the delay between the polarization components (1A, 1B) and the autocorrelation light field (2) is imaged with a second imaging lens on the photosensor device (20),

- the input light field (1) comprises a field of near-collimated light rays, in particular originating from a far object, and the autocorrelation light field (2) is imaged with a first imaging lens on the photosensor device (20), and

- the input light field (1) comprises a field of light rays, in particular originating from a far object, and the autocorrelation light field (2) is imaged with a first imaging lens on an array of micro-lenses being arranged for light field imaging the autocorrelation light field (2) onto the photosensor device (20).

20. Spectral imaging method according to one of the claims 13 to 19, wherein

- the photosensor device (20) is provided by a camera unit of a mobile camera device, e.g. of a mobile phone, coupled with the at least one polarizing element (21),

- the autocorrelation device (10) is fixedly arranged in front of the camera unit, and

- the delay between the polarization components (1A, 1B) of the input light field (1) is varied by at least one of turning the mobile camera device relative to a scene to be imaged, moving a scene to be imaged relative to the camera device and simultaneously collecting the input light field (1) from different spectrally equal portions of a scene to be imaged having different angles relative to the camera device.

FIG. 1

FIG. 2

FIG. 3

FIG. 4

FIG. 5

21  Mono

90°  45°

135°  0°

23

21  RGB

90°  45°

G        R

135°  0°

B        G

24

FIG. 6

FIG. 7

FIG. 8

FIG. 9

S3.0
Prior

S3.1
Information Gain
$\tau_1$

S3.2
Measurement

S3.3
Update

S3.4
Spectrum

Information Gain
$\tau_2$

Measurement

Update

Spectrum

...

FIG. 10

100

110

120

FIG. 11

**EUROPEAN SEARCH REPORT**

Europäisches
Patentamt
European
Patent Office
Office européen
des brevets

Application Number

EP 24 19 8926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GENCO ARMANDO ET AL: "High-sensitivity hyperspectral Fourier-plane microscopy by an innovative common-path interferometer", 20230308, vol. 12428, 8 March 2023 (2023-03-08), pages 124280F-124280F, XP060177147, ISSN: 0277-786X, DOI: 10.1117/12.2649712 ISBN: 978-1-5106-5961-2 * the whole document * | 1-20 | INV. H04N13/232 |
| Y | US 2022/189753 A1 (MOURAD DANIEL [DE] ET AL) 16 June 2022 (2022-06-16) * paragraphs [0004], [0017] * | 1-20 | |

TECHNICAL FIELDS
SEARCHED (IPC)

H04N

The present search report has been drawn up for all claims

| Place of search | Date of completion of the search | Examiner |
|---|---|---|
| The Hague | 24 January 2025 | Wahba, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8926

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2025

| Patent document cited in search report | Publication date | Patent family member(s) | | Publication date |
|---|---|---|---|---|
| US 2022189753 A1 | 16-06-2022 | CN | 114674909 A | 28-06-2022 |
| | | EP | 4012747 A1 | 15-06-2022 |
| | | US | 2022189753 A1 | 16-06-2022 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JEREMY ALLINGTON-SMITH**. Basic principles of integral field spectroscopy. *New Astronomy Reviews*, 2006, vol. 50 (4-5), 244-251
- **GONZALO R. ARCE** ; **DAVID J. BRADY** ; **LAWRENCE CARIN** ; **HENRY ARGUELLO** ; **DAVID S. KITTLE**. Compressive coded aperture spectral imaging: An introduction. *IEEE Signal Processing Magazine*, 2014, vol. 31 (1), 105-115
- Snapshot hyperspectral imaging - the hyperpixel array camera. **ANDREW BODKIN** ; **ANDREW SHEINIS** ; **AMY NORTON** ; **JUSTIN DALY** ; **SCOTT BEAVEN** ; **JAMES WEIN-HEIMER**. Proceedings of SPIE. International Society for Optics and Photonics, 2009, vol. 7334, 73340H
- **LAURA M DALE** ; **ANDRÉ THEWIS** ; **CHRISTELLE BOUDRY** ; **LOAN ROTAR** ; **PIERRE DARDENNE** ; **VINCENT BAETEN** ; **JUAN A FERNÁNDEZ PIERNA**. Hyperspectral imaging applications in agriculture and agro-food product quality and safety control: A review. *Applied Spectroscopy Reviews*, 2013, vol. 48 (2), 142-159
- **SUMNER P DAVIS** ; **MARK C ABRAMS** ; **JAMES W BRAULT**. Fourier transform spectrometry. Else-vier, 2001
- **XINGCHEN DONG** ; **MARTIN JAKOBI** ; **SHENGJIA WANG** ; **MICHAEL H KÖHLER** ; **XIAOXING ZHANG** ; **ALEXANDER W KOCH**. A review of hyperspectral imaging for nanoscale materials research. *Applied Spectroscopy Reviews*, 2019, vol. 54 (4), 285-305
- **YAO-ZE FENG** ; **DA-WEN SUN**. Application of hyperspectral imaging in food safety inspection and control: a review. *Critical reviews in food science and nutrition*, 2012, vol. 52 (11), 1039-1058
- **SILVANO GALLIANI** ; **CHARIS LANARAS** ; **DIMITRIOS MARMANIS** ; **EMMANUEL BALTSAVIAS** ; **KONRAD SCHINDLER**. *Learned spectral super-resolution*, https://arxiv.org/abs/1703.09470
- **LIANG GAO** ; **NOAH BEDARD** ; **NATHAN HAGEN** ; **ROBERT T. KESTER** ; **TOMASZ S. TKACZYK**. Snapshot hyperspectral imaging via spectral basis multiplexing. *Optics Express*, 2016, vol. 24 (3), 3180-3195
- Imaging spectroscopy using tunable filters: a review. **NAHUM GAT**. Proceedings of SPIE. International Society for Optics and Photonics, 2000, vol. 4056, 50-64
- **UTSAV B. GEWALI** ; **SILDOMAR T. MONTEIRO** ; **ELI SABER**. Spectral superresolution with optimized bands. Multidisciplinary Digital Publishing Institute, vol. 11, 1648
- **ALEXANDER F. H. GOETZ**. Three decades of hyperspectral remote sensing of the earth: A personal view. *Remote Sensing of Environment*, 2009, vol. 113, S5-S16
- **NATHAN HAGEN** ; **MICHAEL W. KUDENOV**. Review of snapshot spectral imaging technologies. *Optical Engineering*, 2013, vol. 52 (9), 090901
- **ANDREW ROBERT HARVEY** ; **DAVID WILLIAM FLETCHER-HOLMES**. Birefringent fourier-transform imaging spectrometer. *Optics Express*, 2004, vol. 12 (22), 5368-5374
- **ALEX HEGYI** ; **JOERG MARTINI**. Hyperspectral imaging with a liquid crystal polarization interferometer. *Optics express*, 2015, vol. 23 (22), 28742-28754
- **AURÉLIE JULLIEN** ; **RÉMY PASCAL** ; **UMBERTO BORTOLOZZO** ; **NICOLAS FORGET** ; **STEFANIA RESIDORI**. High-resolution hyperspectral imaging with cascaded liquid crystal cells. *Optica*, 2017, vol. 4 (4), 400-405
- **FAYEZ LAHOUD** ; **RUOFAN ZHOU** ; **SABINE SUSSTRUNK**. Multi-modal spectral image super-resolution. *ECCV*, 2018
- **GUOLAN LU** ; **BAOWEI FEI**. Medical hyperspectral imaging: a review. *Journal of Biomedical Optics*, 2014, vol. 19 (1), 010901
- **ALEJANDRO PARADA-MAYORGA** ; **GONZALO R. ARCE**. *Spectral super-resolution in colored coded aperture spectral imaging*, vol. 2 (4), 440-455
- Diy hyperspectral imaging via polarization-induced spectral filters. **KATHERINE SALESIN** ; **DARIO SEYB** ; **SARAH FRIDAY** ; **WOJCIECH JAROSZ**. 2022 IEEE International Conference on Computational Photography (ICCP). IEEE, 2022, 1-12
- **KOTA TSUJIMORI** ; **JUN HIROTANI** ; **SHUNTA HARADA**. *Application of Bayesian super-resolution to spectroscopic data for precise characterization of spectral peak shape*, vol. 51 (2), 712-717
- Accurate spectral super-resolution from single RGB image using multi-scale CNN. **YIQI YAN** ; **LEI ZHANG** ; **JUN LI** ; **WEI WEI** ; **YANNING ZHANG**. Pattern Recognition and Computer Vision, Lecture Notes in Computer Science. Springer International Publishing, 206-217

- **CHEN YI ; YONG-QIANG ZHAO ; JONATHAN CHEUNG-WAI CHAN**. Spectral super-resolution for multispectral image based on spectral improvement strategy and spatial preservation strategy. *IEEE Transactions on Geoscience and Remote Sensing*, vol. 57 (11), 9010-9024
- **P JACQUINOT**. New developments in interference spectroscopy. *Reports on Progress in Physics*, 1960, vol. 23 (1), 267
- **CLAUDE E SHANNON**. Communication in the presence of noise. *Proceedings of the IRE*, 1949, vol. 37 (1), 10-21
- The theory of infrared sensitivities and its application to investigations of stellar radiation in the near infrared. **P FELLGETT**. Ph. D. thesis. Univ. of Cambridge, 1958
- **P JACQUINOT**. New developments in interference spectroscopy. *Reports on Progress in Physics*, 1954, vol. 23 (1), 267
- **PETER R GRIFFITHS ; JAMES A DE HASETH**. Fourier transform infrared spectrometry. John Wiley & Sons, 2007
- **SIEGFRIED WARTEWIG ; REINHARD NEUBERT**. Ir and raman spectroscopy: fundamental processing. *Advanced drug delivery reviews*, 2005, vol. 57 (8), 1144-1170
- **DAVID WT GRIFFITH ; WILLIAM G MANKIN ; MICHAEL T COFFEY ; DYRK E WARD ; ALLEN RIEBAU**. Ftir remote sensing of biomass burning emissions of co2, co, ch4, ch2o, no, no2, nh3, and n2o. *Global biomass burning: Atmospheric, climatic, and biospheric implications*, 2012, 230-239
- **MATTHEW J BAKER ; JULIO TREVISAN ; PAUL BASSAN ; ROHIT BHARGAVA ; HOLLY J BUTLER ; KONRAD M DORLING ; PETER R FIELDEN ; SIMON W FOGARTY ; NIGEL J FULLWOOD ; KELLY A HEYS et al.** Using fourier transform ir spectroscopy to analyze biological materials. *Nature protocols*, 2014, vol. 9 (8), 1771-1791
- **DAVID A NAYLOR ; M KHALED TAHIC**. Interpolation of aliased spectra. *Optics express*, 2007, vol. 15 (20), 12941-12957
- **EDWIN T JAYNES ; G LARRY BRETTHORST**. Probability theory: The logic of science. Cambridge university press, 2003
- **DEVINDERJIT SIVIA ; JOHN SKILLING**. Data analysis: a Bayesian tutorial. OUP Oxford, 2006
- **PHIL GREGORY**. Bayesian logical data analysis for the physical sciences: a comparative approach with Mathematca® support. Cambridge University Press, 2005
- **STEFAN SCHMUCK ; JAKOB SVENSSON**. Fourier spectroscopy: A Bayesian way. *International Journal of Spectroscopy*, 2017, vol. 2017, 1-29